(19) Europäisches Patentamt
European Patent Office
Office européen des brevets

(11) Publication number: **0 388 976 A2**

(12) # EUROPEAN PATENT APPLICATION

(21) Application number: **90105569.9**

(51) Int. Cl.[5]: **G02F 1/1347**

(22) Date of filing: **23.03.90**

(30) Priority: **28.03.89 US 329938**
**07.06.89 US 363099**
**01.09.89 US 402134**
**22.11.89 US 445769**

(43) Date of publication of application:
**26.09.90 Bulletin 90/39**

(84) Designated Contracting States:
**AT BE CH DE DK ES FR GB GR IT LI LU NL SE**

(71) Applicant: **IN FOCUS SYSTEMS, INC.**
**7770 S.W. Mohawk Street**
**Tualatin Oregon 97062(US)**

(72) Inventor: **Conner, Arlie**
**1514 S.E. Salmon Street**
**Portland, Oregon 97214(US)**
Inventor: **Gulick, Paul E.**
**24727 S.W. Stafford Road**
**Tualatin, Oregon 97062(US)**

(74) Representative: **Meddle, Alan Leonard et al**
**FORRESTER & BOEHMERT**
**Widenmayerstrasse 4/I**
**D-8000 München 22(DE)**

(54) **Color display.**

(57) A color display (10) is formed by stacking two or more colored LCD elements (LC1, LC2, LC3, LC4) (preferably birefringent cells), and operating each of the elements independently. In an alternative embodiment, a color display is formed by operating two colored LCD elements in cooperation with a 2-color mosaic filter.

FIG. 3

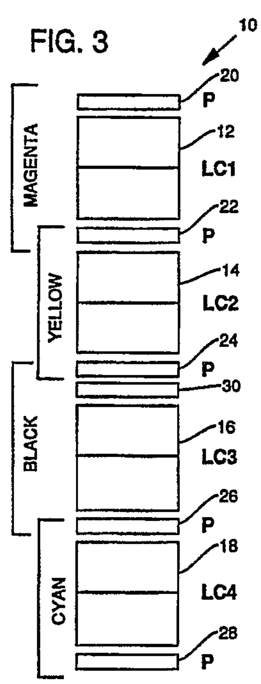


EP 0 388 976 A2

# COLOR DISPLAY

## Background and Summary of the Invention

Much effort has been made in recent years to develop low power color displays. Such efforts have generally employed LCD panels in one of three configurations.

In the first configuration, a plurality of differently colored LCD panels are stacked and illuminated with white light. As the light passes through the stacked layers, pixels in each panel act as controllable color filters, selectively coloring the light exiting the display. U.S. Patent 3,703,329 is representative of such systems and shows a stack of three panels, variously dyed to individually produce the colors yellow, cyan and magenta. Together the panels cooperate, using subtractive color, to produce all eight primary colors. A related system is shown in U.S. Patent 4,416,514. In this system, differently dyed polarizers (yellow, magenta and cyan) are interposed in a series of twisted nematic cells. By varying the voltage applied to each cell, the twist angle of the liquid crystal molecules changes, imparting a variable rotation to the light exiting the cell. The colored polarizers cooperate with this controllably twisted light to select desired colors.

While such stacked cell systems can provide a full color display, they typically have certain drawbacks. One is parallax, inherent in any stacked optical system. Another is poor brightness, due to absorption of light by the dye in dyed cell systems, and due to blockage of cross polarized light by polarizers in systems that rely on polarization rotation to differentiate colors.

The second approach uses only a single LCD panel, but uses it in conjunction with a mosaic color filter. The mosaic filter typically has a plurality of red, green and blue filter elements, each aligned with a pixel in the LCD panel. By controlling the transmissivity of pixels in the LCD panel, the display can pass light through selected areas of the color mosaic filter.

While the color mosaic technique addresses certain shortcomings of the stacked panel approach, it introduces certain problems of its own. One is that brightness is limited because, in the classical color mosaic approach, less than a third of the active pixel area transmits light for any given color. Another shortcoming of the classical approach is that pixel density must be increased by a factor of three to obtain the same resolution as the stacked cell approach. That is, to provide a color display with a horizontal resolution of 640 colored pixels, for example, the LCD panels must have 1920 pixels, 640 for each of the red, green and blue filter elements. This introduces fabrication problems that decrease yields and increase panel costs. Further, the finite width of the gap between pixels must remain, even though the pitch has decreased, so the actual pixel "aperture ratio" can be decreased dramatically. (Some small format thin film transistor (TFT) displays have a total open aperture area of only 30% of the total display surface due to row and column lines and transistor area, etc.)

The third approach is birefringence color. In such systems, the birefringent operating mode of certain materials is exploited to produce color, as opposed to reliance on colored dyes in guest-host type cells or reliance on rotation of light through known twist angles in twisted nematic cells.

Birefringent color systems typically take two forms: those relying on passive birefringent layers to impart a birefringent effect to a liquid crystal cell (as shown in U.S. Patent 4,232,948), and those in which the liquid crystal material itself exhibits a birefringent effect (sometimes called "electrically controlled birefringence" or "tunable birefringence"). In the latter instance, the degree of birefringence is a function of the voltage applied to the liquid crystal material. By switching the applied voltage to different values, different colors can be produced. Color displays relying on this principle are shown in U.S. Patents 3,785,721, 3,915,554 and 4,044,546.

During recent years, so called "supertwisted" or "highly twisted" nematic cells have become popular in many applications. Such cells are described, inter alia, in U.S. Patents 4,697,884 and 4,634,229. Supertwisted nematic (STN) cells generally function in a birefringent mode. However, unlike earlier birefringent cells, STN cells exhibit a bistable behavior wherein they switch rapidly from a deselect state to a select state and back again as the excitation (RMS) voltage crosses a switching threshold. The select and deselect voltage regions can be made quite close to one another, such as 1.20 volts and 1.28 volts, permitting the cells to be multiplexed at high rates. Fig. 1 shows the transmission of a representative STN cell (with a particular polarizer orientation) as a function of applied voltage, illustrating the steepness of the switching function. Note that this curve shows the overall photopic "brightness" and does not reveal any coloration of the liquid crystal in the select and deselect states.

It is the multiplexibility of STN cells that makes them particularly desirable. This multiplexibility is achieved without active elements (i.e. drive transistors on each pixel, etc.) and without exotic alignment and liquid crystal operating modes (i.e. ferroelectric, phase-change, hysteresis, etc.). Thus, STN provides an inexpensive direct-multiplexed display type requiring only M + N drivers to operate a display comprised of M x N pixels.

There is an inverse-squared relationship between the number of display lines to be "addressed" and the difference between display "on" and "off" driving voltages (RMS average). As the number of display lines increases, the difference in driving voltage must decrease. To illustrate, a multiplex rate of 100:1 can be achieved with approximately a 10% difference in driving voltages, and a MUX rate of 240:1 can be achieved with approximately a 6% difference in driving voltages. Theoretically, arbitrarily high MUX rates can be achieved if the driving voltage difference is made small enough.

The main drawback to STN cells is the optical operating mode - birefringence. That is, the only way to distinguish pixels driven by the "on" voltage from those driven by the "off voltage is the difference in birefringence between the two pixels. (As noted, for high information content displays, the difference in driving voltages is minute and decreases rapidly with an increase in the number of display lines that must be driven.) To distinguish the difference in pixel birefringence, polarizers are used - one to polarize the entering light to a known polarization, and one to select only one polarization of exiting light for examination. Depending on the state of the pixels, the light oriented to pass through the exit polarizer will be one of two colors. For best contrast, the polarizers are usually arranged so that these two colors are yellow and blue. (Actually, only one color can be selected by orientation of the polarizers -and this color can only be selected from a relatively small spectrum of colors. There is very little design freedom in varying the color in the second state - it is essentially a function of the first color.)

Fig. 2 shows the transmission characteristics of a representative yellow/blue mode STN cell (with associated polarizers) when the cell is in its select and deselect states. As can be seen, when the cell is "selected" (by applying an excitation voltage of 1.56 volts), the transmission spectrum has a maximum at 400 nanometers, a minimum at 600 nanometers, and an intermediate value at 500 nanometers. When the cell is "deselected" (by reducing the excitation voltage to 1.41 volts), the transmission spectrum includes a null at 400 nanometers, a maximum at 500 nanometers, and an intermediate value at 600 nanometers. Light exiting the cell/polarizer combination in the select state is thus principally blue, and light exiting in the deselect state is green plus yellow plus red, which appears as yellow to the human observer.

Unlike TN cells and cells operating in other modes, a birefringent STN cell cannot be operated in a black/white mode. The reason is that black requires all wavelengths of light to be linearly cross-polarized with the exit polarizer to effect complete light blockage, and true white requires all wavelengths of light to be linearly polarized parallel with the exit polarizer to effect complete light passage. The birefringent operating mode, by definition, prevents such results since different wavelengths of light are polarized differently during passage through the material, rendering a linear polarizer incapable of either blocking all or passing all wavelengths of the exiting light. Thus, STN cells are unavoidably colored. However, this drawback has been tolerated in order to achieve the high multiplexibility that STN provides.

In order to eliminate the birefringence color, some manufacturers have incorporated various compensation layers in display assemblies. One such compensation layer is a second birefringent cell of opposite twist than the first to counteract the wavelength dependence in the cell's behavior. Another type of compensation layer, sometimes used in conjunction with the above-mentioned blue/yellow mode STN LCDs, is a polarizer that has been dyed to pass cross-polarized light in the blue and red portions of the spectrum in order to make the yellow state of the LCD "whiter." This still yields a blue/white LCD, instead of the desired black/white. However, this color limitation is usually accepted in order to achieve the high multiplex ratio.

While the birefringence of STN cells unavoidably produces colors, the colors so produced are generally considered too limited in range and too inferior in quality to be suitable for use in color displays. Far preferred are the rich colors that can be achieved with guest-host cells, or TN cells with dyed filters.

In accordance with the present invention, a color display system is formed by operating a plurality of birefringent cells in cooperation with one or more colored polarizers, thereby complementing and correcting the birefringence colors and yielding a brighter display.

In an alternative embodiment, a color display is formed by operating two colored cells (typically colored by birefringence color) in cooperation with a 2-color mosaic filter.

The invention will be more readily apparent from the following detailed description, which proceeds with reference to the accompanying drawings.

## Brief Description of the Drawings

Fig. 1 shows the transmission characteristics of a representative STN cell as a function of applied voltage.

Fig. 2 shows the transmission spectrum of a representative STN cell when operated in its select state (with an excitation voltage of 1.56 volts) and in its deselect state (with an excitation voltage of 1.41 volts).

Fig. 3 is a schematic diagram of a display subassembly according to one embodiment of the present invention.

Figs. 4 - 6 are spectral photometer plots showing ideal light transmission characteristics for three liquid crystal panels used in the display subassembly of Fig. 3 when in their selected and deselected states.

Figs. 7 - 9 are spectral photometer plots showing the actual light transmission characteristics of three Kyocera liquid crystal panels used in the display subassembly of Fig. 3 when in their selected and deselected states.

Fig. 10 is a diagram illustrating the chromaticity of the Kyocera panels of Figs. 7-9 when in their selected and deselected states.

Fig. 11 is a diagram showing the eight basic colors achieved by operating yellow, cyan and magenta panels in their various combinations.

Fig. 12 details the construction of a display assembly incorporating three panels according to the present invention.

Fig. 13 shows a first projection system according to the present invention.

Fig. 14 is a perspective view of an integrated assembly including a display assembly and associated optics to facilitate use with an overhead projector.

Fig. 15 shows a second projection system according to the present invention.

Fig. 16 shows a self contained color display using a display subassembly according to the present invention with associated projection optics.

Fig. 17 shows a first direct view display system according to the present invention.

Fig. 18 shows the spectral distribution of a backlight that may be used with the display system of Fig. 17.

Fig. 19 shows a second direct view display system according to the present invention.

Fig. 20 shows a third direct view display system according to the present invention.

Figs. 21 and 22 shows a fourth direct view display system according to the present invention.

Fig. 23 shows a portable computer employing a direct view display according to the present invention.

Fig. 24 shows a laptop computer employing a direct view display according to the present invention.

Fig. 25 shows a portable computer including a direct view display according to one embodiment of the present invention.

Fig. 26 is a perspective view of the portable computer of Fig. 25.

Fig. 27 shows a portable computer including a direct view display according to another embodiment of the present invention.

Fig. 28 is a perspective view of the portable computer of Fig. 27.

Fig. 29 shows a portable computer including a direct view display according to yet another embodiment of the present invention.

Fig. 30 is a perspective view of the portable computer of Fig. 29.

Fig. 31 shows a display stand that permits a display subassembly to be backlit for direct viewing.

Fig. 32 shows a display system employing two light sources and two optical paths according to the present invention.

Fig. 33 shows a display system employing one light source and two optical paths according to the present invention.

Fig. 34 shows a computer with a roll-up screen according to the present invention.

Fig. 35 shows a display subassembly using a thin film transistor (TFT) LCD panel in conjunction with an STN panel.

Fig. 36 shows a display subassembly using a TFT panel, an STN panel, and a color shutter.

Fig. 37 shows a display subassembly using two panels.

Fig. 38 illustrates a possible color gamut produced by one of the panels of Fig. 37.

Fig. 39 illustrates the gamut of Fig. 38 after being analyzed with a blue polarizer.

Fig. 40 illustrates the spectral characteristics of two possible polarizers used in the display subassembly of Fig. 37.

Fig. 41 is a schematic view of a hybrid color display subassembly according to one embodiment of the present invention.

Fig. 42 is a schematic view illustrating correspondence between a single pixel in a yellow panel with two pixels in a blue panel and two pixels in a color mosaic filter in the hybrid display subassembly of Fig. 41.

Fig. 43 illustrates the selective coloring of white light by the hybrid display subassembly of Fig. 41.

Fig. 44 is a spectral plot showing ideal and actual light transmission characteristics for a blue LCD panel used in the hybrid display subassembly of Fig. 41.

Fig. 45 is a spectral plot showing ideal and actual light transmission characteristics for a yellow LCD panel used in the hybrid display subassembly of Fig. 41.

Fig. 46 is a spectral plot showing ideal and actual light transmission characteristics of cyan filter elements used in a color mosaic filter in the hybrid display subassembly of Fig. 41.

Fig. 47 is a spectral plot showing ideal and actual light transmission characteristics of magenta filter elements used in a color mosaic filter in the hybrid display subassembly of Fig. 41.

Fig. 48 is a chromaticity diagram illustrating the color gamut achieved with the display subassembly of Fig. 1.

## Detailed Description

Before proceeding, it may be helpful to first review certain principles of color optics. The primary light colors are generally considered to be red, green and blue. White light is composed of all three primaries. White light with red filtered (i.e. removed) therefrom is termed cyan; white light with green filtered therefrom is termed magenta; and white light with blue filtered therefrom is termed yellow. These latter colors, cyan, magenta and yellow, are sometimes termed subtractive primary colors, since they denote the absence of one of the primary colors.

Filters selectively attenuate (or "absorb") light of certain colors and pass light of other colors relatively unattenuated. A red filter, for example, attenuates blue and green light and lets red light pass. Similarly, a blue filter attenuates red and green light and lets blue light pass. Finally, a green filter attenuates red and blue light and lets green light pass. Filters of the primary colors thus subtract two primary colors and let the third pass.

Filters of the subtractive primary colors subtract one primary color and let the two others pass. For example, a cyan filter attenuates red light and lets blue and green light pass. Similarly, a magenta filter attenuates green light and lets blue and red light pass. Finally, a yellow filter attenuates blue light and lets green and red light pass.

These properties are summarized in Table I.

TABLE I

| Filter | Absorbs | Passes |
|---|---|---|
| Red | Green, Blue | Red |
| Green | Red, Blue | Green |
| Blue | Red, Green | Blue |
| Yellow | Blue | Green, Red |
| Cyan | Red | Blue, Green |
| Magenta | Green | Blue, Red |

Again, although somewhat counter-intuitive, it should be remembered that a blue filter does not absorb blue light. It passes blue light and blocks light of other colors.

It should further be noted that the human eye is more sensitive to certain wavelengths of light than to others. The eye's normal daytime response (termed "photopic" response) typically peaks at about 554 nanometers and diminishes to near negligible values around 400 and 700 nanometers.

For convenience of discussion, the optical spectrum is generally segregated into the red, green and blue portions by dividing lines at 500 and 600 nanometers. (For physiological reasons, a precise dividing line cannot be defined.) Using these boundaries, the human eye perceives 55% of the energy in white light from the green portion of the spectrum (500 to 600 nm.), 30% from the red portion (above 600 nm.), and only 15% from the blue portion (below 500 nm.). Perfect green, red and blue filters thus transmit 55%, 30% and 15% of white light, respectively (photopically). Since yellow, cyan and magenta are combinations of these colors, it can be seen that perfect yellow, cyan and magenta filters transmit 85%, 70% and 45% of white light, respectively.

Many of the illustrated embodiments employ supertwisted nematic LCD panels that are controllably colored by exploitation of the birefringence effect. As mentioned in the Background discussion, birefringence is an optical phenomenon in which light oriented along one axis of a material propagates at a different speed than light oriented along another axis. This asymmetry results in different wavelengths of light having different polarizations when they exit the material. Polarizers can be used to analyze the elliptically polarized light exiting the panel to select colors. Prior art uses of birefringence to control color in LCD panels are discussed in U.S. patents 3,876,287, 4,097,128, 4,127,322, 4,394,069, 4,759,612 and 4,786,146.

## Display Subassembly

Turning now to Fig. 3, there is shown a basic display subassembly 10 according to one embodiment of the present invention. The illustrated subassembly includes four LCD panels 12, 14, 16, 18 sandwiched alternately between five polarizers 20, 22, 24, 26 and 28. An optional retardation film layer 30 is also shown.

In the illustrated subassembly 10, the birefringent properties of the panels 12 - 18 are "tuned" (by choosing the thickness (d) of the liquid crystal layer and its optical refractive index anistropy ($\Delta n$)) to yield a desired coloration. For example, the birefringent properties of the first panel 12 are tuned so that incoming green light (which has been polarized by the entrance polarizer 20) propagates through the liquid crystal material in such a manner that the orientation of its principal axis upon leaving the cell is orthogonal to the exiting polarizer 22 when the panel 12 is in its deselected (i.e. deenergized) state. The panel 12 and polarizers 20 and 22 thus act as a magenta filter when the panel is deselected. The tuning of panel 12, and the orientations of the associated polarizers, are also selected so that, when the panel is in its selected (i.e. energized) state, green light is passed, together with red and blue light, to yield a substantially "white" color. (For expository convenience, panel 12 is sometimes called the "magenta" panel and is said to controllably absorb green light. It will be recognized, however, that this and the other panels must generally be operated in conjunction with associated front and back polarizers to achieve the desired coloring effect.)

The illustrated second panel 14 is similarly tuned to operate as a yellow filter (i.e. absorbing blue) when in its deselected state and to pass all wavelengths of light (i.e. white light) when in its selected state. It is sometimes termed the "yellow" panel. The illustrated fourth panel 18 is similarly tuned to operate as a cyan filter.

The illustrated third panel 16 is an optional "black" panel that may be included to increase contrast. Its construction may take any of a number of forms, as discussed below.

As mentioned earlier, it is the thickness (d) of the liquid crystal layer and its optical refractive index anistropy ($\Delta n$) that principally determine each panel's spectral response for a given twist angle $\Psi$. While the panel's response is determined by a complex formula, the response can be roughly approximated as dependent on the ratio $\Delta nd/\Psi$. In the illustrated embodiment, these ratios have the values shown in Table II:

TABLE II

| Panel | $\Delta nd/\Psi$ | $\Psi$ |
|---|---|---|
| Magenta | 0.19 | 4.19 (rad.) |
| Yellow | 0.23 | 3.84 |
| Cyan | 0.25 | 4.19 |

It will be recognized that the $\Delta nd/\Psi$ ratios referenced in Table II can be achieved with any number of cell thicknesses. (The artisan will further recognize that these ratios may be achieved by use of various passive compensation layers.) The choice of cell thickness is a tradeoff between several factors, including the panel's response time and uniformity. The response time of the panel generally increases with the panel thickness. Consequently, to achieve a fast response time, it is desirable to use a thin panel. However, as the cell thickness decreases, small fabrication errors, such as a 1$\mu$ change in cell thickness over the width of a panel, yields a relatively large variation in panel color behavior and switching threshold voltage. To insure color uniformity, it is desirable to use a thick panel so fabrication errors are kept to a small percentage of the total liquid crystal thickness. As a compromise between these considerations, a cell thickness of 6 to 12$\mu$ may be used.

Spectral photometer plots showing the light transmission qualities of ideal panels 12, 14 and 18 (again, considered in conjunction with their associated polarizers) are provided in Figs. 4, 5 and 6, respectively. Panels suitable for use as panels 12, 14 and 18 are available from Kyocera of Hayato, Japan as part numbers KC-6448ASTP-SC-M, KC-6448ASTP-SC-Y and KC-6448ASTP-SC-C, respectively, or may be fabricated using known techniques. Spectral photometer plots showing the actual behavior of the Kyocera panels are provided in Fig. 7 - 9. The plot for the magenta panel in Fig. 7 was made with a red entrance polarizer. The plot for the cyan panel in Fig. 9 was made with a blue exit polarizer. (As can be seen from these curves, neither the passage of light of the desired color nor the attenuation of light of undesired colors is perfect, but the resulting effect is more than adequate to provide saturated colors throughout the human visual area.) A chromaticity diagram illustrating performance of the Kyocera panels in their selected and deselected states is provided in Fig. 10.

Each of panels 12 - 18 comprises a plurality of pixels that can be individually energized to change the spectral distribution of the light that is permitted to pass therethrough. By selecting corresponding pixels in the three colored panels, light of any color can be transmitted through the display subassembly 10. To transmit a pixel of green light, for example, a pixel in the yellow panel 14 is deselected to absorb blue light, and the correspondingly positioned pixel in the cyan panel 18 is deselected to absorb red light. By superimposing the spectral transmission curves of these two pixels, it will be recognized that the remaining, transmitted light has a peak in the region of the spectrum the eye perceives as green. (The magenta panel 12 is left selected (i.e. substantially white transmitting) in this example and thus has no relevant filtering effect.)

The color blue can be similarly achieved by deselecting corresponding pixels in the yellow and magenta panels, and red can be achieved by deselecting corresponding pixels in the cyan and magenta panels. If it is desired to absorb all light and thus produce a black pixel on the image plane, pixels in all three panels are deselected. Fig. 11 shows the eight basic colors achieved by operating a yellow/cyan/magenta series of panels in their various combinations.

Polarizers are needed to analyze the light passing through the liquid crystal panels in order to achieve perceptible contrast. In prior art systems, the polarizers are typically neutral (i.e., dyed black by iodine). In the present invention, colored polarizers (which are "leaky") can be used advantageously in certain positions to pass more light, improving the brightness and allowing color balance improvements.

The first panel 12 is illustrated as being "magenta." Light entering it is polarized by the first polarizer 20. Normally, all colors of light orthogonal to the axis of polarizer 20 would be absorbed by the black dye of a conventional, neutral polarizer, resulting in an immediate loss of 50% (theoretical) of the light. (In actual practice, the loss of a neutral polarizer is about 55 - 58%.) This loss can be cut dramatically if the first polarizer is dyed magenta. Such a polarizer still passes the white light parallel to the polarizer's axis, but additionally passes blue and red light orthogonal to its axis. This additional blue and red light is permitted to pass further into the display subassembly and ultimately contributes to the overall brightness of the resulting display, instead of being absorbed by the first polarizer as is normally the case. The losses normally associated with this first polarizer are thus cut by about two thirds. Display brightness improves commensurately.

(In an alternative embodiment, the entrance polarizer 20 may be dyed another color, such as red. While theoretically not as advantageous as a magenta polarizer, a red polarizer is easier to realize and still offers a substantial improvement in brightness, passing about 59% of the incident light, as opposed to 45% or less for a neutral polarizer.)

The same benefit can be achieved at the exiting end of the sandwiched display subassembly 10. The last panel 18 in the subassembly is illustrated as being cyan. By dying the polarizer 28 adjacent thereto cyan, the blue and green light that would normally be absorbed thereby is allowed to leak through and pass out of the display subassembly, again improving display brightness.

(Again, the exit polarizer 28 may be dyed a color, such as blue, instead of cyan. A blue polarizer passes about 56% of the incident light, still yielding a significant improvement in brightness over a neutral polarizer.)

Conventional neutral polarizers can be used at the positions (22, 24, 26) intermediate the liquid crystal panels and a significant improvement in display brightness is still achieved by virtue of the two colored polarizers described above. The use of neutral intermediate polarizers also assures that there is no birefringence interaction between panels (i.e. the deselected or selected nature of the $\Delta nd$ of the center panel makes no difference to the passage of light and total birefringence of the adjacent panels). (It should be mentioned that such interaction may be advantageously exploited in other embodiments.)

In other embodiments, the polarizers at the intermediate positions in the subassembly may be colored. Care should be taken, however, not to interfere with the color-selective properties of the birefringent panels. For example, if a yellow colored polarizer is interposed between the magenta and yellow panels 12, 14, it will interfere with the color-selective properties of the magenta panel. As noted, the magenta panel itself does not absorb the undesired green light. Instead, its birefringence is tuned so that light propagating through the panel exits with the axis of its principal green component oriented orthogonally to the polarizer 22, causing it to be blocked. If this polarizer 22 is colored yellow, it will leak green and red light, including the green light that is meant to be blocked. Consequently, use of a yellow polarizer between the magenta and yellow panels defeats the careful tuning of the first panel's birefringence.

An equally poor color choice for the first intermediate polarizer 22 is magenta. A magenta polarizer would permit blue and red light to enter the yellow panel 14 at an unexpected orientation. The yellow panel was tuned so that blue light entering at a known polarization would propagate and exit with a principal polarization that would be blocked by the exiting polarizer 24. If the blue light enters the yellow panel 14 at an unexpected orientation, it will exit at an unexpected orientation and will not be blocked by the exiting polarizer. Consequently, use of a magenta colored polarizer 22 defeats the careful tuning of the yellow panel's birefringence.

Polarizer 22 should be colored, if at all, a color that both of the adjoining panels are intended to pass. In this case, since the magenta panel is intended to pass blue and red, and the yellow panel 14 is intended to pass green and red, the polarizer 22 should desirably be colored the common color: red.

If the black panel 16 is omitted (together with associated retardation film 30 and polarizer 26), similar logic would dictate that the polarizer 24 between the remaining yellow and cyan panels should desirably be colored, if anything, green.

In embodiments including a black/white panel, such as panel 16 in Fig. 3, the polarizers positioned adjacent thereto should be neutral (i.e. not colored) since any polarizer coloring would permit the black panel to leak light - an undesired effect.

To optimize display brightness, the dyed polarizers should exhibit a high degree of transmissivity to cross-polarized light in their "leaky" portion of the spectrum. In the illustrated embodiment, the polarizers each comprise a dyed 5 mil sheet of stretched polyvinyl alcohol. Table III specifies suitable dichroic dyes, which are available under various brand names from Crompton & Knowles, Atlantic, Ciba-Geigy and a variety of other dye suppliers.

TABLE III

| POLARIZER | DYE |
|---|---|
| Magenta | Direct Red #81 |
| Yellow | Direct Yellow #18 |
| Cyan | Direct Blue #1 |

The foregoing discussion has described only one of many possible sequences of polarizers and panels. Others can be devised. For example, while the first polarizer 20 in the above example has been described as being magenta in order to achieve an improvement in brightness, an alternative embodiment with the same sequence of LCDs can here use a blue or red polarizer instead. A blue or red polarizer still provides some improvement in brightness since it leaks light that would be absorbed by a black polarizer. Of course, a black polarizer can also be used if desired. The basic LCD sequence itself can also be varied with corresponding changes in the associated polarizers. The basic sequences are set forth in Table IV:

TABLE IV

| POL1 | LCD1 | POL2 | LCD2 | POL3 | LCD3 | POL4 |
|---|---|---|---|---|---|---|
| Y/G/R/K | **Y** | G/K | **C** | B/K | **M** | M/R/B/K |
| M/R/B/K | **M** | R/K | **Y** | G/K | **C** | C/G/B/K |
| Y/G/R/K | **Y** | R/K | **M** | B/K | **C** | C/G/B/K |

where Y is yellow, K is black, G is green, C is cyan, B is blue, M is magenta and R is red.

Fig. 12 illustrates in greater detail a display subassembly using just the magenta, yellow and cyan panels. The polarizers are red, black, black and cyan, respectively. Included in Fig. 12 are details of the relative alignment of the component panels and polarizers in an implementation using the Kyocera panels. The alignment angles are typically specified by the manufacturer and depend, inter alia, on the rubbing angles of the front and rear panel plates, the twist of the LCD molecules, and on various boundary layer phenomena associated with the liquid crystal material.

As noted, such a three panel subassembly can produce the color "black" (the absence of light) by deselecting each panel. Since the light passing through the subassembly is progressively stripped of its green, blue and red components, theoretically no light exits the subassembly. As a practical matter, however, the imperfect responses of the three panels permit some light of various colors to leak through at an attenuated level. The net result is a dark brown or grey color. While such an arrangement yields a contrast ratio of approximately 10:1 -- more than adequate for many applications --some applications require contrast ratios on the order of 100:1. To achieve such ratios, a fourth panel, such as the "black" panel 16 illustrated in Fig. 3, may be included in the subassembly. The characteristics of the black panel may be optimized for the intended application.

In one application, namely digital computer graphics using the RGBI standard, an "intensity" signal is used to differentiate each of the eight basic colors used in RGB systems into two colors, yielding a total of 16 colors. In such application, the black cell is optimized for maximum transmission when in the selected state. The contrast provided by the cell is of lesser importance. That is, a contrast range of 2:1, or even 1.5:1, will suffice to distinguish the 16 colors of the RGBI system.

In contrast, "full color" systems (i.e. television or high quality color computer graphics) require high contrast. To achieve the 256 or more colors that such systems require, an overall contrast ratio of 100:1 may be needed. Since the basic magenta/yellow/cyan (M/Y/C) subassembly delivers only a 10:1 contrast ratio, the black panel must provide a 10:1 ratio on its own. Thus, it should be optimized for blackest black. By cascading the two systems (M/Y/C and black), the contrast figures are multiplied, producing 100:1 overall white to black contrast, and allowing excellent grey shading and range of color. Of course, highly saturated primary colors still require M/Y/C contrast, but the black panel provides greater depth in the shadows and details in the highlights.

In the illustrated embodiment, the black panel 16 is a supertwisted nematic cell operated in conjunction with a retardation film 30 that tunes the cell for maximum contrast. In other embodiments, a double supertwisted nematic cell or even a twisted nematic cell may be used.

In actual practice, the "black" cell need not be black. A birefringent cell tuned to the blue end of the spectrum, for example, may be used since the human eye is relatively insensitive to blue light, yielding a relatively high photopic contrast ratio.

One advantage of display subassembly 10 is the flexibility it affords in possible panel/polarizer sequences. If one sequence seems unworkable, a design can be optimized about another one. For example, if it is found that a good quality magenta polarizer cannot be obtained, then a design that does not require a magenta polarizer can be adopted.

It will be recognized that display subassembly 10 can be used in a variety of applications, such as color projection systems and in direct view displays. A variety of such applications are detailed below.

## Projection Systems

In a first projection system embodiment 32 of the invention, shown in Fig. 13, a display subassembly 10 is positioned on the transparent projection surface 34 of a conventional overhead projector 36. Such projectors typically include an illumination bulb 38 and a Fresnel lens 40 under the projection surface to produce light beams that pass through a transparency and converge onto a projection lens assembly 42. (Due to the short focal length and high power required of lens 40, this lens is often formed by cementing two or more lower powered Fresnel lenses together.)

When display subassembly 10 is used in such an embodiment, it is desirable to provide a Fresnel lens 44 to collimate the converging light from the projection surface 34 prior to illumination of the display subassembly. The light exiting the subassembly is then focused by a lens 46 (which is also desirably in Fresnel form) onto the projection lens assembly 42. (Lens 46 here serves the same purpose as the Fresnel lens 40 provided under the projection surface of the projector in the projector's normal operation, namely to focus light towards the projection lens assembly 42.) An integrated assembly 47 including both the display subassembly 10 and the Fresnel lenses 44, 46 is shown in Fig. 14.

In a second projection system embodiment 48 of the invention, a portion of which is shown in Fig. 15, the collimating and focusing Fresnel lenses 44, 46 used in the Fig. 13 embodiment are omitted. Instead, the panels comprising the display subassembly are fabricated with different pixel spacings. The spacings on the various panels are selected so that corresponding pixels in the various panels are aligned with the converging light exiting the projection surface of the projector. By this arrangement, no accessory optics are required. Parallax effects are avoided since the internal optics of the display subassembly are designed to cooperate with the focused light used by the projector.

Projection technology may also be used to provide a self contained display in which an image is projected onto the rear of a viewing screen. A color monitor for a computer may be realized in this fashion. One such arrangement 50 is shown in Fig. 16. In this embodiment, a field lens 52 is used to collimate the light from bulb 54 prior to its passage through the display subassembly 10. The resulting image is projected by a second lens 56 onto a translucent medium 58 which can then be viewed from the opposite side by a user.

## Direct View Systems

A display subassembly 10 according to the present invention can also be incorporated into a number of direct view display systems, such as color graphics displays for portable or laptop computers.

In direct view displays, it is usually desirable to backlight the display with substantially collimated light. On the viewing side of the display, it is generally desirable to provide exit optics that permit a wide viewing angle without parallax effects.

In a first direct view embodiment 60, shown in Fig. 17, the display subassembly 10 is backlit from a light source, such as a light panel 62. In such embodiment, entrance and exit optic elements 64, 66 generally collimate the light prior to entrance into the display subassembly and scatter the approximately-collimated light exiting the display. Each of optic elements 64, 66 may comprise a plate having formed thereon a plurality of microlenses 68, one aligned to each pixel. Light incident on one of the microlenses on element 64 is directed substantially normal to the plane of the subassembly and thus passes through the pixels of the component panels in the proper alignment, regardless of its initial orientation. Collimated light exiting the subassembly 10 is dispersed by the microlenses on the exit optic element 66, thereby permitting the color image to be viewed from a wide range of angles without parallax effects. The interstitial areas 69 between the lenses on exit optic 66 may be colored black to minimize stray light and to improve perceived contrast.

In other versions of the Fig. 17 embodiment 60, the arrays of microlenses can be replaced by arrays of fiber optic collimator faceplates or lenticular lenses.

Fig. 18 shows the spectral distribution of a representative florescent backlight 62 that may be employed in the embodiment of Fig. 17. As is characteristic of florescent lighting, the spectrum has characteristic peaks corresponding to certain chemical components used in the light. These peaks (and the nulls) can be tailored to specific applications by changing the chemistry of the lamp.

In a second direct view embodiment 70, shown in Fig. 19, the backlit illumination can be collimated by a novel arrangement employing a parabolic mirror 72 (desirably in Fresnel form). In this embodiment, a pair of linear light sources, such as fluorescent bulbs 74, illuminate a generally flat mirrored surface 76 that has facets arranged to provide one axis of collimation. The angles of the facets vary with placement on the surface to simulate a sectioned parabolic reflector. Light reflected from this mirrored surface is substantially collimated. However, to remove any stray off-axis light, a micro-venetian blind material 78, such as Light Control Film marketed by 3M Corp, is desirably placed between the mirror and the display subassembly. This material is a thin plastic film containing closely spaced black microlouvers to absorb light misaligned with respect to the louvers. Substantial collimation of the illuminating light is thus achieved.

In the Fig. 19 embodiment 70, a translucent light dispersing material 80, such as a ground glass plate or a commercially available diffusion material (i.e. Rolux film manufactured by Rosco of Port Chester, N.Y.) is mounted adjacent the exit side of the display subassembly 10 to display the resulting color image.

Fig. 20 shows a third direct view embodiment 82 of the invention. In this system, the display subassembly 10 is illuminated by a tungsten-halogen lamp 84 that operates in conjunction with a curved reflector 86. The reflector is computer designed (using well known optical modeling programs or ray tracing techniques) to provide equal energy illumination to all regions of the display subassembly. A corrector plate 88, mounted adjacent the display subassembly, provides a normalization of illumination angle, i.e. perpendicular to the assembly.

The lamp 84 in the Fig. 20 embodiment is desirably part of a removable module that also includes a shield 90 for preventing direct illumination of the display subassembly by the lamp. Again, a diffuser material 92 is mounted adjacent the exit side of the display subassembly to permit direct, wide angle viewing.

A fourth direct view embodiment 94 of the invention is shown in Figs. 21 and 22 and includes fiber optic backlighting of the display subassembly. In the illustrated system, a tungsten-halogen lamp 96 is again used, but this time is optically coupled to a bundle of optical fibers 98. Each fiber terminates at a microlens 100 on a plate 102 of such microlenses. These microlenses can be arrayed in a rectangular pattern on the plate 102, or can be arranged in a hexagonal pattern for higher density. In either event, the microlenses are matched to the dispersion patterns of the fiber so that light exiting the fibers is substantially collimated by the lenses. Again, a diffuser optic 104 is desirably positioned adjacent the exit side of the display subassembly.

In the Fig. 21, 22 embodiment, it is desirable that tolerance be provided for non-uniformities, and maximum use be made of all light, including paraxial rays. Fortunately, with the intimately contacting diffuser 104 on the top surface of the display subassembly, there is a reasonable "blur" tolerance. Some stray light can even be beneficial to "anti-alias" the jagged square pixels.

The above-described direct view displays may each be advantageously incorporated into a portable or laptop computer. "Portables" are generally considered to be computers that are sized for ready portability, but still require use of 120 volts AC from a wall outlet. They often take a suitcase-like form. "Laptops," on the other hand, generally rely on an internal rechargeable battery and often take a "clam-shell" form.

Fig. 23 shows a portable computer 106 including a direct view display 108 according to the present invention. To operate the computer, the case 112 is opened and the display is positioned for viewing. (In some portables, the display is coupled to the computer by a coiled cable and can be positioned where desired.) When the computer is no longer needed, the display is packed into the case, secure against abuse.

Fig. 24 shows a laptop computer 114 including a direct view display 108 according to the present invention. As can be seen, the display is coupled to the remainder of the computer by a hinge arrangement 115. The laptop's internal rechargeable battery 105 powers both the computer and the display.

Again, to operate the computer 114, the hinged display 108 is lifted, exposing it for viewing. When the computer is no longer needed, the hinged display is secured in its collapsed position, protecting it from abuse.

Figs. 25 - 30 illustrate a variety of other portable computer designs that are adapted for use with a display subassembly according to the present invention. In Figs. 25 and 26, a computer 200 includes a display subassembly 10 mounted by a hinge 202 to the front top edge of a computer case 204. When in use, the display subassembly 10 is illuminated by light reflected off a mirrored surface 206 from a lamp 208. The lamp 208 is a point source (i.e. it has a relatively small physical extent, such as a small filament) and is fixedly attached to the body of the computer case 204. The diverging light from this point source is collimated by a flat lens (not particularly shown in the figures) mounted adjacent the display subassembly.

To fold for storage, the display subassembly 10 on computer 200 pivots rearwardly into the body of the computer case, and the panel 210 to which the mirrored surface is attached folds down over the display, protecting it from abuse. The computer keyboard 212 slides into a recess 214 in the front portion of the computer case and a door 216 closes to secure the keyboard in place.

Figs. 27 and 28 show a portable computer 2l8 in which the display subassembly 10 is illuminated by light reflected from a mirror 220 that slides out the back of the computer case 222. Again, the illumination is provided by a point source, such as a tungsten-halogen bulb 224 that is mounted to the computer case 222 rather than to display subassembly itself.

In operation, the display subassembly is positioned in a substantially vertical orientation on a hinge 226 at the rear top portion of the case. To collapse for storage, the display subassembly folds forwardly and latches in place over the keyboard 228. The mirror 220 is slid towards the case and locks with the mirrored surface adjacent the case's back side. (In another embodiment, the mirrored surface is small enough to be positioned entirely within the computer case. In still another embodiment, the illustrated mirror is hinged at point 230, permitting it to be folded flat and slid entirely within the computer case.

Again, a flat correction lens is desirably mounted on the rear of the display subassembly to collimate the light reflected from the mirror 220.

Figs. 29 and 30 show a portable computer 232 in which the display subassembly is directly illuminated from a point source 234, without an intervening mirror. In this embodiment, the display subassembly 10 is again attached by a hinge 236, this one in a cavity 240 in the front portion of the computer case 238. In use, the display subassembly 10 is positioned substantially vertically and is illuminated by the point source 234. To fold for storage, the display subassembly 10 folds rearwardly into the cavity and is held secure by the keyboard 242, which is inverted and latched into place to serve as a top cover.

Fig. 34 shows yet another computer 250 according to the present invention. In computer 250, a point light source 252 is disposed within a case 254 and illuminates a display subassembly 256, which fills an aperture formed in the case. An image formed by projection of light through this display subassembly is projected on a screen 258 positioned at the back of the computer case 254. In the illustrated embodiment, the projection screen is flexible and is rolled for storage about a spring-loaded roller 260 disposed at the bottom rear portion of the computer case. To erect the screen for viewing, a screen support 262 is pivoted upwardly from its collapsed storage position to an upright position at the back of the computer. The unrolled screen can then be fastened to the screen support by one or more clips, or like means (not shown).

It will be recognized that in all of the foregoing embodiments, the pixel pitches on the various panels may be made different (as shown in Fig. 15) to align the pixels with the orientation of the incoming light. By such a construction, it is not necessary to collimate or otherwise process the light prior to illumination of the stacked subassembly. It will further be recognized that the invention can be practiced by simply illuminating a stack of uniformly pitched panels with uncollimated light, although parallax effects may cause improper pixel registration, blur and false color edges.

Fig. 31 shows a final embodiment 116 illustrating use of a display subassembly 10 according to the present invention in a direct view display. In this embodiment, the display subassembly is removably positioned on an illumination stand 118 for direct viewing. The illumination stand 118 has a light-transmitting surface 120 against which the display subassembly can rest, and an internal light source 122 for directing illumination therethrough. A small shelf 124 on which the display can be positioned is provided on the exterior of the stand.

The stand 118 is desirably collapsible to permit ready portability. This can be achieved with a hinge and bellows arrangement 126. Small size can be maintained by using folded optics that include mirroring on the inside back wall 128 of the stand.

The stand may be provided with optics that emulate the optics of a conventional overhead projector. That is, these optics may focus light incident on the display 10 so that it converges on a point a short distance away. In the illustrated embodiment, these optics may comprise a Fresnel plate lens 130. In such case, the Fresnel entrance optic 44 used in the Fig. 13 projection system embodiment may be used to collimate the focused light prior to its illumination of the display subassembly.

In this embodiment, the exit optic 132 is again a simple translucent dispersion medium to permit wide angle viewing of the collimated image.

It will be recognized that the viewing stand 118 advantageously permits an LCD display to be used either as a projection device for large audiences (i.e. as an "electronic transparency"), or as a single-user computer screen.

## Systems with Split Optic Paths

While the foregoing discussions have been directed to display subassemblies comprised of single stacks of panels, additional advantageous results can sometimes be achieved by splitting the stack into two or more substacks and illuminating each separately. One such arrangement is shown in Fig. 32.

In the Fig. 32 arrangement 134, the stacked panels are split into two sub-stacks to permit illumination by two different light sources. The first light source 136 is a tungsten-halogen incandescent lamp, which produces a spectrum that is strong in red, especially when the lamp's operating voltage is decreased, which may be desired to increase the lamp's life. The second light source 138 is a mercury arc-lamp, which produces a spectrum rich in deep blue light (430 nm), with a large amount of energy also in the mid-green (540 nm) portion of the spectrum. The complementary spectrums produced by these two light sources are advantageously combined in the embodiment of Fig. 32 to achieve good brightness, long lamp life and high color temperature "white."

As shown in Fig. 32, light from the tungsten-halogen lamp 136 follows a first optical path that includes a holographic or dichroic mirror 139. (This mirror may be designed to pass all of the spectrum except a narrow notch [20 or 30 nm] at 540 nm.) This filtered light continues on to illuminate a stacked assembly 140 that includes red- and green-controlling panels (i.e. "cyan" and "magenta"). (For clarity of presentation, the polarizers, collimator, and other optical elements used in this stack and elsewhere in the Fig. 32 embodiment are not illustrated. Following the logic discussed above, the entrance polarizer on the magenta panel may be red, the exit polarizer on the cyan panel may be green, and the intermediate polarizer may be neutral.) The light exiting the stacked assembly 140 is reflected off mirrors 142 and 144 and is directed to exit optics for projection or direct viewing. The tungsten-halogen light 136 thus provides illumination at the red and green portions of the spectrum, and the stacked assembly 140 controls these colors.

Light from the second, mercury arc-lamp 138 follows a second optical path towards a dichroic mirror 146, which reflects green light up to mirror 139 (for additional illumination of the red/green control stack 140) and passes blue light into a blue controlling (i.e. "yellow") LCD 148. The light exiting this blue LCD continues to and through the mirror 144, joining with the red and green light and continuing to the exit optics. A full color image is thus produced.

(It will be recognized that splitting the light in this fashion provides some design freedom, viz., that the red- and green-controlling panels can be tuned without regard to their blue performance [since they encounter no blue light] and the blue-controlling panel can be similarly tuned without regard to its red and green performance.)

If increased contrast is desired, a black/white panel may be included in either the first or second optical paths. Alternatively, an additional magenta (i.e. green controlling) cell may be included in the stack 140 since green is the dominant contributor to photopic brightness.

While the Fig. 32 embodiment provides different optical paths for different portions of the optical spectrum, in other embodiments the different optical paths can be dedicated to different polarizations of light. Such split-by-polarization systems offer improved brightness since the cross-polarized light that is filtered from single path systems is instead directed to a second path where it is utilized.

Fig. 33 shows a system 150 similar to that of Fig. 32, except the Fig. 33 system uses a single light source 152. Blue light from this light source is stripped off by a dichroic mirror 154, reflected off a mirror 156, collimated by a collimator 158, and directed into a blue controlling LCD assembly 160. Light exiting this LCD assembly is focused by a lens 162 through a blue-passing mirror 164 and into a lens 166 for projection onto a viewing screen.

The red/green light from lamp 152 passes through mirror 154, is collimated by a collimator 168, and illuminates a stack 170 that includes cyan and magenta panels (which control red and green light, respectively). The light exiting the stack 170 is again focused by a lens 172, reflected off the mirror 164 and directed into the projection lens 166.

## Other Stacked Cell Embodiments

While the foregoing description has focused on a single class of embodiments that incorporate supertwisted nematic panels, it will be recognized that a variety of other embodiments can be constructed using different display elements. Exemplary is the display 300 shown in Fig. 35. In this display, a thin film transistor (TFT) liquid crystal panel 302 is operated in conjunction with an optical element 304 that exhibits an electrically controllable birefringent (ECB) effect. (Thin films transistor panels are known in the art and disclosed, inter alia, in U.S. Patents 4,821,092, 4,819,038, 4,816,885, 4,776,673, 4,743,099, 4,743,098, 4,723,838, 4,715,930, 4,654,117, 4,649,383, 4,636,038, 4,621,260, 4,599,246, 4,591,848, 4,581,619, 4,461,071, 4,386,352, 4,385,292, 4,299,447 and 3,824,003.)

In the illustrated embodiment, a limited birefringence mode liquid crystal effect may be given to the TFT panel by adding a retardation film to the (90°) TN of a standard TFT-LCD and by selecting the polarization orientation appropriately.

In preferred embodiment, the TFT 302 is optimized for whitest white (instead of blackest black). The TFT is also tuned to broaden the dip in the spectral transmissivity curve and place it at the appropriate wavelength required by the stacked combination of panels.

In some such embodiments, a double dip in this curve may be obtained by use of a retardation film. By providing several layers of retardation film, ideal "notch filter" performance may more nearly be achieved.

The ECB element 304 may be a supertwisted nematic panel detailed earlier, or may comprise a conventional twisted nematic cell, or a great variety of other elements, such as electro-optic or electro-acoustic crystals. (STN cells have generally not been used in a classical electrically controlled birefringence mode due to the very restricted range of operating voltages dictated by multiplexibility requirements. Rather, they have been operated in a bistable mode, operating in either the select or non-select states, not in between. The Fig. 35 embodiment of the present invention can exploit the voltage- dependent birefringence exhibited by STN cells within the narrow R.M.S. operating range between $V_{select}$ and $V_{non\text{-}select}$ to achieve a broad range of intermediate birefringent colors.)

The illustrated TFT panel 302 and ECB panel 304 are sandwiched between three polarizers 306, 308 and 310. The subtractive coloration provided by each pixel in the ECB display element 304 is a function of the signal driving that pixel. The range of colors produced by this variable birefringence is augmented by one or more additional colors attainable by use of the TFT panel 302 to produce a full color display.

A related embodiment is shown in Fig. 36. In this figure, a display subassembly 320 comprises a white/yellow mode STN (or DSTN) panel 322, a thin film transistor panel 324 and a color shutter assembly 326 in stacked arrangement with associated polarizers. (Color shutter assemblies are known in the art and are described, inter alia, in U.S. Patents 4,758,818, 4,726,663, 4,652,087, 4,635,051, 4,611,889 and 4,582,396.)

In the illustrated display subassembly 320, the color shutter is operated in alternate frames to block red and green light, respectively (thus giving the appearance of cyan and magenta). The TFT provides a very fast switching speed. The STN cell 322 is relatively slower than the TFT, but the blue light it controls is relatively less perceptible to the human eye, so the slower response speed is of little significance.

The Fig. 36 embodiment is intended to lower the costs associated with making a high-information content full color LCD based display system. This embodiment requires only one (monochrome) TFT panel, as opposed to three that may otherwise be used to control red, green and blue.

The STN 322 may be grey-scaled, using a single bit plane of RAM, to 8 or 16 levels. It can provide sufficiently fast response time for moving images.

The TFT 324 is operated at twice the normal frame rate (i.e. greater than or equal to 120 Hz) and, along with the color shutter 326, controls the red and green image fields sequentially. Both the color shutter and the TFT (with their associated polarizers) are tuned to leak blue all the time, thereby improving the color balance, especially when a tungsten-halogen lamp is used.

In still another embodiment of the present invention, two LCD panels may be stacked and operated independently to produce a full gamut of colors. A display assembly 330 according to this construction is shown in Fig. 37. For expository convenience, the panels will be referenced panels 332, 334, although a variety of other technologies can be used.

STN panels 332 and 334 are fabricated with a higher value of $\Delta nd$ than those STN panels illustrated earlier. An exemplary panel may have a 240 degree twist angle, with a $\Delta nd$ value of 1.4. The larger $\Delta nd$ value produces a wider variation in the voltage variable coloration effect. When a high information content, multiplex-addressed LCD panel is grey-scaled (either by PWM or multiple frame averaging), intermediate voltages (between $V_{select}$ and $V_{non\text{-}select}$) can be attained on each pixel, despite the nearly-bistable switching behavior that characterizes STN cells.

Between neutral polarizers, the first panel 332 can obtain, for example, the color gamut shown in Fig. 38. By using a blue (ideal characteristic, pure blue leakage only) polarizer, the gamut is as illustrated in Fig. 39, instead.

As can be seen, the color gamut with the blue polarizer is shifted towards the blue, with the result that "yellow" cannot be obtained, but "white" is obtained instead. The "blue" may not be as pure as desired ideally, but human-factors experts suggest that a desaturated blue is better for communicating visual information.

If the first polarizer 336 is dyed blue, producing the color gamut shown in Fig. 39, the second panel 334 needs only to be able to make yellow and white to make the full gamut of saturated primary and secondary colors. To be safe and insure a true black state, the leakages of the first and third polarizers 336, 338 must not overlap, so rather than choose a yellow polarizer for polarizer 338, it is somewhat preferable to choose an orange polarizer instead (Fig. 40). Of course, by tuning the $\Delta nd$ of the LCD and, optionally, adding additional layers of birefringent material (such as retardation films), various birefringence colors can be made within each layer. A desirable display according to this embodiment has the following characteristics:

1) good white and black states (overall contrast $\geq$ 10:1);

2) good color saturation (especially redness of red); and

3) extra good blue light transmission to counteract tungsten illuminant (to raise the color temperature, i.e. color correction).

By using various commercially available color polarizers, the display subassembly can be optimized for various purposes and with different performances for different needs.

Other possible complimentary pairs of colors for polarizers 336 and 338 are cyan and red, green and red, green and violet, green and magenta, and green and blue.

The magenta formed by electrically controlled birefringence is generally poor, because the red edge is too soft and must be supplemented. Thus, a red polarizer is desirable, which provides excellent sharpness (i.e. steepness of edge between yellowish-green and red). The gamut of the first LCD 332 may thus be, inter alia, one of the following:

a) red/magenta/white;
b) red/yellow/white; or
c) magenta/yellow/white.

In these cases, the second panel 334 should subtract red, at least, so cyan is its chief color and it may attain one of the following:

d) cyan/magenta/white;
e) green/cyan/white;
f) cyan/green/yellow/white; or
g) blue/cyan/white.

Preferred combinations include a + f, b + g or c + d, above.

While the display subassembly 330 has been described as operating in a color subtractive mode, it will be recognized that the display may also be operated in an additive mode, either with adjacent pixels being operated together to add spatially, or with a single pixel in the stacked assembly being operated with alternate colors to add temporally.

If both liquid crystal panels 332, 334 are tuned to produce four distinct shades of color, they can be operated co-jointly to produce sixteen colors and minimize the need for grey scaling.

Of the foregoing combinations, the presently preferred is to tune panel 332 to produce a color gamut extending from magenta, through yellow to white, and dye polarizer 336 red. Panel 334 can be tuned to produce a color gamut extending from cyan, through green and yellow to white, and polarizer 338 can be dyed green. Again, partial compensation can be used to optimize the various colors produced.

## Additional Remarks

It will be recognized that the use of colored polarizers with birefringent cells provides a great deal of design freedom. The reason is that a colored polarizer io renders the response of a cell at certain wavelengths irrelevant. Taking as an example a magenta (green blocking) cell, the cell must normally be optimized for a number of factors: high transmissivity of blue light in both the select and deselect states, low transmissivity of green light in the select state but high transmissivity of green light in the deselect state, and high transmissivity of red light in both states. Such optimization typically requires a compromise of all factors. When used in conjunction with a magenta polarizer, however, the cell's transmissivity at blue and red becomes only a minor concern. The magenta-dyed polarizer causes the cell to pass blue and red regardless of the characteristics of the cell. With the importance of these factors minimized, the design of the cell can focus on just one factor - high contrast between the select and deselect states for green - and no compromises need be made.

In optimizing the response of the cells, it is sometimes desirable to use additional optical components. For example, in order to tune the range of birefringence effects it is sometimes desirable to include retardation films or other passive compensation layers adjacent the cells.

A birefringent cell, operated in conjunction with a neutral polarizer, exhibits a sinusoidal transmissivity versus wavelength curve, as was shown in Fig. 2. Taking again the example of a magenta (green blocking) cell, the cell's $\Delta nd$ is selected so the minimum of its sinusoidal curve falls somewhere in the green portion of the spectrum. This minimum, however, may be relatively narrow, permitting relatively large amounts of higher and lower wavelength green light to pass through the cell/polarizer combination. To broaden this "notch" in the transmissivity curve, a retardation film may be employed. While retardation films are generally used to tune the cell's characteristics (i.e. to move the dip in the curve up or down in wavelength), the film's action in reversing part of the cell's twist also serves to broaden the dip somewhat. Thus, the transmissivity curve of the magenta cell in its deselect state may be made to more nearly approximate the ideal (i.e. a rectangular notch that encompasses all of green - 500 to 600 nm.).

While the display subassembly has been described as including single supertwisted liquid crystal panels, other types of birefringent optics, such as double supertwisted panels or single panels embodying other technologies (such as electro-optic [i.e. lithium tantalum niobate], acoustic-optic, or PET cells) can alternatively be used. A higher resolution color display can be achieved by stacking two or more cells, with the active lines on one cell overlapping active lines on the other, similar to the basic technique shown in U.S. Patent 4,448,490. Faster switching times can be achieved by stacking several thin panels for each color, as disclosed in U.S. Patent 4,547,043. The basic principles of the invention are also applicable to other display technologies, such as interference color systems.

In other embodiments, certain birefringent panels may be stacked without intervening polarizers. For example, two panels (with or without different Δnd) may be stacked without an intermediate polarizer to produce white, yellow, green and cyan in the four combinations of select states. A green polarizer can be used on the outside layer, since green is common to all these colors. Such an embodiment is especially valuable for a white, magenta, cyan and blue combination, since overhead projection needs more blue throughput, which may be obtained by use of a "pure blue" polarizer.

In still other embodiments, if any of the LCD birefringence colors are not ideal, some attenuation of specific light wavelengths might enhance the color gamut and overall contrast. For example, two polarizers might be used together, or a weak color filter compensator (i.e. a conventional gelatin filter) might be added.

It will be recognized that grey scaling techniques can readily be applied to the present invention to provide the full gamut of possible colors. In one such embodiment, grey scaling is applied to each of the three colored cells. In another embodiment, grey scaling is applied simply to a fourth (typically black) cell included in the stack. U.S. Patents 4,840,462, 4,840,460, 4,818,078, 4,766,430, 4,743,096, 4,709,995, 4,560,982, 4,508,427, 4,427,978 and 4,043,640 teach various grey scaling techniques.

It will further be recognized that the invention can be practiced with more or less panels than the three or four illustrated. For example, it is advantageous to provide laboratory instruments, such as oscilloscopes and analyzers, with displays formed by stacking two supertwisted birefringent panels with one or more colored polarizers. The display may take virtually any of the forms discussed above and still be suitable for inclusion in the instrument. While color gamut is compromised somewhat by such a two panel stack, brightness is increased and cost is reduced.

Finally, it will be recognized that many advantageous results can be achieved by cojointly operating several TFT panels, either in stacked or split-optic arrangement, rather than including a single TFT panel in a stack with other panels, as particularly discussed above. Some such embodiments, including certain of the split optic path embodiments, do not rely on exploitation of the birefringence effect. A number of such embodiments may be realized by substituting TFT panels for the STN panels in the illustrated embodiments. (In such embodiments, the neutral polarizers typically provided on a TFT panel by the manufacturer may be removed, any spectral deficiencies of the panel may be compensated for by retardation film [i.e. commercially available panels are particularly deficient in the blue portion of the spectrum, which deficiency can be alleviated by retardation film], and colored polarizers may be added to achieve the benefits discussed earlier.)

## Hybrid Display

According to another apsect of the present invention, a display device or subassembly 410 may be formed with a color mosaic filter 412, two color LCD panels 414, 416, and three polarizers 418, 420, 422, as shown in Fig. 41. (Panels 414, 416 used in the illustrated embodiment are again supertwisted nematic LCD panels that are controllably colored by exploitation of the birefringence effect.)

In the illustrated embodiment (as explained earlier), the first panel 414 is "tuned" as a blue filter (i.e. absorbing red and green) when deselected. The second panel 416 is tuned to operate as a yellow filter (i.e. absorbing blue).

It may be noted that, unlike most prior art stacked panel displays, the illustrated embodiment includes one panel of a primary color (i.e. blue) and one panel of a subtractive primary color (i.e. yellow). Their cooperative relationship to yield a full color display is made possible by the color mosaic filter 412, as described below.

In the illustrated embodiment, the yellow panel 416 includes a plurality of individually controllable pixels regularly arrayed in a 640 by 480 matrix. (In Fig. 41, each pixel is illustrated by the pair of electrodes 424 that defines it.) The blue panel 414 includes twice as many pixels, arrayed in a 1280 by 480 matrix. The blue panel is cooperatively positioned with the yellow panel so that each pixel of the yellow panel is optically superimposed on two pixels of the blue panel.

The color mosaic filter 412 is comprised of a plurality of cyan and magenta filter elements, 426, 428 respectively, regularly arrayed in a 1280 by 480 matrix. The color mosaic filter is similarly cooperatively positioned with the blue and yellow panels 414, 416 so that each pixel of the filter is optically superimposed on one pixel of the blue panel, and each pair of pixels in the filter is optically superimposed on one pixel in the yellow panel. The above-described superimposition relationship is illustrated in Fig. 42.

The color mosaic filter 412 may be implemented in a number of ways. For example, the filter may comprise a dyed acetate or polyester substrate, aligned during fabrication with the other layers, or it may comprise the surface of one of the polarizer plates on which filter dyes are offset or screen printed.

The fabrication of color mosaic filters is more particularly detailed, inter alia, in U.S. Patents 4,712,874, 4,770,525, 4,776,671, 4,773,737, 4,752,771, 4,690,511, 4,458,175 and 4,653,862.

In operation, all light passing through the display follows one of two different paths 430 or 432 (Fig. 41). The first path 430 is through a cyan filter element 426, the blue panel 414 and the yellow panel 416. The second path 432 is similar but starts with passage through a magenta filter element 428 and concludes by passing through the blue panel and the yellow panel.

Light following the first path 430 is first stripped of its red component (since the cyan mosaic filter element 426 attenuates red light). The remaining blue and green light next passes through the blue panel 414. If this panel is in its deselected state, it acts as a blue filter, passing only blue light. If this panel is in its selected state, it passes both the blue and green light.

The light exiting the blue panel 414 then enters the yellow panel 416. If the yellow panel is in its deselected state, it attenuates blue light, so passes no light if the blue panel was deselected, and passes only green light if the blue panel was selected. If the yellow panel is in its selected state, it passes all light, so passes blue light if the blue panel was deselected, and passes blue and green light (i.e. cyan light) if the blue panel was selected.

Light following the second path 432 is first stripped of its green component (since the magenta mosaic filter element 428 attenuates green light). The remaining red and blue light next passes through the blue panel 414. If this panel is in its deselected state, it acts as a blue filter, passing only blue light. If this panel is in its selected state, it passes both the blue and red light.

The light exiting the blue panel 414 then enters the yellow panel 416. If this yellow panel is in its deselected state, it attenuates blue light, so passes no light if the blue panel was deselected, and passes only red light if the blue panel was selected. If the yellow panel is in its selected state, it passes all light, so passes blue light if the blue panel was deselected, and passes blue and red light (magenta) if the blue panel was selected.

The colors resulting from these various combinations are illustrated in Fig. 43.

Each of the two paths 430, 432 can produce the colors black and blue. The double passage of blue is advantageous because most incandescent illumination has relatively less blue energy than energy of other colors. Thus, the passage of blue light through both paths acts to correct a color imbalance normally inherent with incandescent lighting. In particular, tungsten "white" or 3200° K is color corrected by this arrangement to 5600° K.

Neither of the paths 430 or 432 by themselves can produce yellow or white. However, the human eye can average adjoining cyan and magenta pixels to perceive white, and can average adjoining green and red pixels to perceive yellow. The average of the colors of two adjoining pixels is termed the color of a "super pixel," of which there are 640 across the width of the display. This arrangement thus can yield the full gamut of color.

Table V summarizes the foregoing discussion:

TABLE V

| After Filter Element | After Blue Panel | After Yellow Panel | Average |
|---|---|---|---|
| C | C (wh) | C (wh) | Wh |
| M | M (wh) | M (wh) | |
| C | C (wh) | G (yel) | Y |
| M | M (wh) | R (yel) | |
| C | C (wh) | C (wh) | C |
| M | B (b) | B (wh) | |
| C | C (wh) | G (yel) | G |
| M | B (b) | Blk (yel) | |
| C | B (b) | B (wh) | M |
| M | M (wh) | M (wh) | |
| C | B (b) | Blk (yel) | R |
| M | M (wh) | R (yel) | |
| C | B (b) | B (wh) | B |
| M | B (b) | B (wh) | |
| C | B (b) | Blk (yel) | Blk |
| M | B (b) | Blk (yel) | |

where B is blue, Blk is black, C is cyan, G is green, M is magenta, R is red, W is white and Y is yellow, and the colors in parentheses indicate whether a panel pixel is in its white (selected) or colored (deselected) states.

The polarizers 418, 420, 422 used in the illustrated embodiment are needed to analyze the light passing through the liquid crystal panels 414, 416 in order to achieve perceptible contrast. As noted earlier, polarizers in prior art displays are usually neutral (i.e., dyed black by iodine). In the illustrated embodiment, colored polarizers can again be used in certain positions to pass more light, improving the brightness and allowing color balance improvements.

Panel 414 is illustrated as being blue when in its deselected state. Light entering it is polarized by an entrance polarizer 418. Normally, all colors of light orthogonal to the axis of polarizer 418 would be absorbed by the black dye of a conventional, neutral polarizer, resulting in an immediate loss of 50% of the light. This loss can be cut dramatically if the polarizer 418 is dyed blue. Such a polarizer still passes the white light parallel to the polarizer's axis, but additionally passes blue light orthogonal to its axis. This additional blue light is permitted to pass to the yellow panel 416 and ultimately contributes to the overall brightness of the resulting display, instead of being absorbed by the first polarizer as is normally the case. The losses normally associated with this first polarizer are thus cut by a third (radiometrically). Display brightness improves commensurately.

The same benefit can be achieved at the exiting end of the stacked assembly 410. Panel 416 is illustrated as being yellow in its deselected state. By dying the polarizer 422 adjacent thereto yellow, the red and green light that would normally be absorbed thereby is allowed to leak through, again improving display brightness.

In addition to the foregoing benefits, colored polarizers also ease the design requirements of the LCDs with which they are associated. While an LCD designer must normally be concerned about the performance of a panel across the entire spectrum, the use of a colored polarizer with the panel renders the performance at certain colors irrelevant. For example, in designing the blue panel 414, the designer need not worry about its performance in the selected and deselected states in the blue portion of the spectrum. The blue polarizer 418 will cause the panel to pass blue regardless of its state, so the designer can focus on optimizing performance in the green and red portions of the spectrum. Similarly with the yellow polarizer 422. Since this polarizer will cause the yellow panel 416 to pass green and red light regardless of its state, the designer can focus on optimizing performance of the panel in the blue portion of the spectrum.

Spectrophotometer plots showing the ideal and actual light transmission qualities of panels 414 and 416 (again, considered in conjunction with their associated polarizers) are provided in Figs. 44 and 45, respectively. Panels suitable for use as panels 414, 416 are available from Kyocera of Kyoto, Japan or may be fabricated using known techniques.

Spectrophotometer plots showing the ideal and actual light transmission qualities of cyan and magenta filter elements 426, 428 are provided in Figs. 46 and 47. Suitable filter materials or dyes are available from Crompton & Knowles, Brewer Science, Kodak Wratten, and Lee Colortran International.

As can be seen from the foregoing curves, neither the passage of light of the desired colors nor the attenuation of light of undesired colors is perfect in the actual panels and filters. However, the resulting effect is more than adequate to provide saturated colors throughout the human visual area. A chromaticity diagram illustrating the color gamut resulting from these imperfect elements (using color illumination) is shown in Fig. 48.

The foregoing discussion has described only one of many possible combinations of panel colors and mosaic filter colors. Others can readily be devised. Generally speaking, the preferred of these embodiments are characterized as follows:

the first panel has 2N pixels that pass either all colors, or only primary color C;

the second panel has N pixels that pass either all colors, or only a color subtractive primary (A + B);

the color mosaic filter has N pixels that pass the color subtractive primary (A + C), and N more pixels that pass the color subtractive primary (B + C);

(where A, B and C are assigned from the primary colors red, green and blue).

Thus, other embodiments include one in which the filter elements are colored magenta and yellow, and the panels are colored red and cyan; and a second in which the filter elements are colored cyan and yellow, and the panels are colored green and magenta.

As noted earlier, the illustrated embodiment is advantageous due to the color correction it offers with incandescent light. However, these other embodiments have their own advantages. The embodiment with magenta and yellow filter elements, for example, can advantageously be used to color compensate fluorescent light, which is typically weak in the red portion of the spectrum.

It will be recognized that this hybrid foregoing display subassembly 410 may be used in any of the display systems described earlier.

From the foregoing description, it will be recognized that this hybrid embodiment solves many of the problems and deficiencies associated with prior art color display technologies. In addition to addressing the parallax and brightness problems noted earlier, the present invention offers a number of other advantages. One is the color compensation that corrects for the excessive red energy output from incandescent illumination sources. Another is a simplification that can be made in the display's drive circuitry due to the fact that the blue panel requires data at only twice the nominal shift clock frequency, instead of three-times as required with conventional three color filter displays. This 2X relation is easier to implement in digital logic than the 3X required in the prior art. Furthermore, the mosaic color filter can be fabricated independently of the polarizers and the panels, permitting its independent optimization. Its use of only two colors reduces the area on the filter dedicated to a black matrix that typically separates the constituent filter pixels, further increasing display brightness. Finally, the blue and yellow panels used in the illustrated embodiment are well developed designs that are based on well understood technology.

Having described and illustrated the principles of this hybrid display with reference to a preferred embodiment and several variations thereon, it should be apparent that the display can be modified in arrangement and detail without departing from such principles. For example, while the display subassembly has been described as including single supertwisted liquid crystal panels, other types, such as double supertwisted panels or panels embodying other technologies, can alternatively be used. Similarly, while the color mosaic filter has been described as comprising a plurality of pixels, in other embodiments a conventional color stripe arrangement may be used instead. Similarly, while the display subassembly has been described as including three polarizers, two LCD panels and one color mosaic filter, in other embodiments of the invention, additional optical components can also be used, as detailed earlier.

Still further, while the illustrated embodiment has shown a system in which entering light can pass through two distinct light paths within a single display subassembly, in alternative embodiments these two light paths can be defined by two separate assemblies. For example, a color projection system may comprise first and second projectors, with the first using a display subassembly having a solid magenta filter, a blue-controlling panel and a red-controlling panel; and the second using a display subassembly having a solid cyan filter, a blue-controlling panel and a green-controlling panel. In one embodiment, the red- and green-controlling panels can each be a blue/white mode LCD, as discussed above. The images from these two projectors can be superimposed and projected onto a common screen.

In view of the wide variety of embodiments to which the principles of our invention may be applied, it should be recognized that the illustrated embodiments are to be considered illustrative only and not as limiting the scope of the invention. Instead, we claim as our invention all such modifications as may come within the scope and spirit of the following claims and equivalents thereto.

The features disclosed in the foregoing description, in the claims and/or in the accompanying drawings may, both, separately and in any combination thereof, be material for realising the invention in diverse forms thereof.

## Claims

1. In a color display system that includes first and second portions in stacked arrangement with a polarizer interposed therebetween, each of said portions including a liquid crystal cell, an improvement wherein each of the cells is of the supertwisted nematic type and exhibits a total twist angle greater than or equal to 180° and less than 360°, and the portions are tuned to provide different spectral responses.

2. A method of producing a color display comprising:
providing first and second optical assemblies, each of the assemblies including a plurality of pixels, each of said pixels exhibiting a birefringent effect that varies in response to a signal applied thereto;
stacking said assemblies with a pixel in the first assembly being linearly aligned with a corresponding pixel in the second assembly;
interposing a polarizer between the assemblies; and
applying a first dynamic signal to the pixel in the first assembly, and applying a second dynamic signal different from the first to the corresponding pixel in the second assembly.

3. The method of claim 2 in which the dynamic signal applied to the first assembly changes periodically among more than two values, thereby producing more than two distinct birefringent effects.

4. A color display comprising:
first and second optical assemblies, each of the assemblies including a plurality of pixels, each of the pixels being independently operable to birefringently control passage of a portion of a spectrum of light passing therethrough;
a first polarizer interposed between the optical assemblies; and
second and third polarizers sandwiched about the optical assemblies;
wherein at least one of the second or third polarizers is dyed a color selected from the group cyan, magenta and yellow.

5. In a color display method in which first and second optical elements are stacked and pixels thereof individually operated, the pixels of the first optical element being controllably operated to subtract light of a first color from light passing therethrough, the pixels of the second optical element being controllably operated to subtract light of a second color different than the first from light passing therethrough, an improvement comprising:
providing birefringent optical elements as the first and second optical elements, each of said birefringent optical elements exhibiting a birefringent effect which varies in response to a signal applied thereto, the first birefringent optical element exhibiting a deleterious spectral property whereby its transmission at the second color is a function of the signal applied thereto, thereby rendering light transmission though the stack at the second color a function of both the signal applied to the second optical element and the signal applied to the first optical element; and
decoupling control of the second color from the first optical element by operating the first optical element in conjunction with a polarizer dyed to pass light of the second color orthogonal to a polarization axis thereof, thereby causing the first optical element to bleed the second color and minimizing the correlation between transmission of light of the second color and the signal applied to the first optical element.

6. In a color display that includes entrance and exit polarizers and that can be operated to yield at least the colors black, white, red, green, blue, cyan, yellow and magenta, an improvement wherein the display includes at least two stacked birefringent subassemblies, each of the subassemblies defining a plurality of pixels, each of said pixels being independently operable to birefringently control passage of a portion of a spectrum of light passing therethrough.

7. An accessory for use with a conventional overhead projector to project electronically generated color images therefrom, the projector having a bulb, a projection lens, and a projection surface having a Fresnel lens thereunder, the Fresnel lens focusing light from the bulb into the projection lens, the accessory being adapted to rest on the projection surface and comprising:
first lens means for receiving converging white light from the projection surface of the projector and collimating said light;
second lens means for receiving collimated light and focusing said light into the projection lens;
a display assembly positioned between the first and second lens means and illuminated by the collimated light, said subassembly including first, second, third and fourth polarizers and further including first, second and third birefringent display subassemblies, each including a liquid crystal display panel, the birefringence of said display subassemblies being tuned, respectively, to first, second and third subtractive complementary colors, each of said panels defining a plurality of electronically operable pixels, said panels being stacked so that corresponding pixels in each of said panels are aligned with the direction of the collimated light, the first panel being positioned between the first and second polarizers, the second panel being positioned between the second and third polarizers and the third panel being positioned between the third and fourth polarizers.

8. The accessory of claim 7 in which:
one of the panels is yellow;
one of the panels is cyan;
one of the panels is magenta;
the colors of the first and fourth polarizers are selected from the list: yellow, cyan, magenta and black; and
the colors of the second and third polarizers are selected from the list: red, green, blue and black;
wherein at least two of the polarizers are colored a color other than black.

9. A color display assembly comprising first, second, third and fourth polarizers and further including first, second and third birefringent display subassemblies, each including a supertwisted nematic liquid crystal display panel, the birefringence of said display subassemblies being tuned, respectively, to first, second and third subtractive complementary colors, each of said panels defining a plurality of electronically operable pixels, said panels being stacked so that corresponding pixels in each of said panels are optically aligned, the first panel being positioned between the first and second polarizers, the second panel being positioned between the second and third polarizers and the third panel being positioned between the third and fourth polarizers.

10. A method of producing a color display comprising:
providing first and second optical assemblies, each of the assemblies including a plurality of pixels, each of said pixels exhibiting a birefringent effect that varies in response to a signal applied thereto;
stacking said assemblies with a pixel in the first assembly being optically aligned with a corresponding pixel in the second assembly; and
applying a first dynamic signal to the pixel in the first assembly, and applying a second dynamic signal different from the first to the corresponding pixel in the second assembly.

11. The method of claim 10 which further includes tuning the first and second assemblies so that the pixels included therein birefringently control different portions of the optical spectrum.

12. In a stacked cell electroptic display, an improvement comprising use of both a primary color cell and a subtractive primary color cell in cooperative relationship.

13. In an electroptic display using a color mosaic filter comprised of a plurality of filter elements of at least two colors, an improvement comprising passing blue light through all of the mosaic filter elements.

14. A display method comprising:
illuminating two optical paths with illumination comprised of first, second and third primary light colors;
in the first path:
selectively attenuating light of the first color;
selectively attenuating light of both the second and third colors; and
attenuating light of the second color; and
in the second path;
selectively attenuating light of the first color;
selectively attenuating light of both the second and third colors; and
attenuating light of the third color.

15. A color display system comprising a color mosaic filter stacked with first and second color liquid crystal display panels, wherein the first liquid crystal display panel defines a uniform array of pixels of a first size, and the second liquid crystal display panel defines a uniform array of pixels of a second size larger than the first, and the first and second panels are stacked so that each of the pixels of the second panel is optically superimposed over a plurality of pixels in the first panel.

16. A color display system comprising a color mosaic filter stacked with first and second LCD subassemblies;
the mosaic filter including alternating pixels of first and second different colors selected from the subtractive primary colors: yellow, cyan, magenta;
each of said subassemblies defining a plurality of electronically operable pixels, the birefringence of the pixels in the first subassembly being tuned to the subtractive primary color not included in the pixels of the color mosaic filter, the birefringence of the pixels in the second subassembly being tuned to a primary color complementary to the subtractive primary color of the first subassembly.

FIG. 1 Prior Art

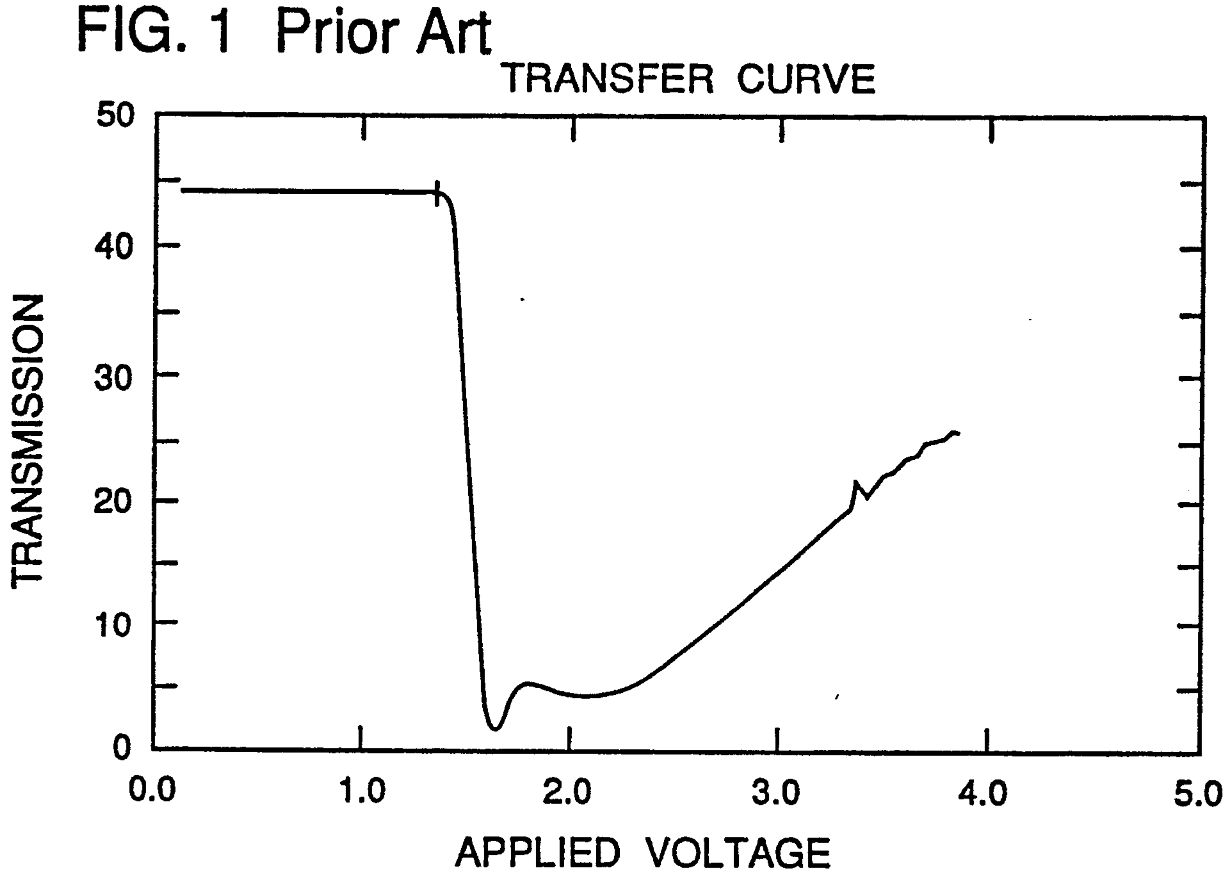


FIG. 2 Prior Art

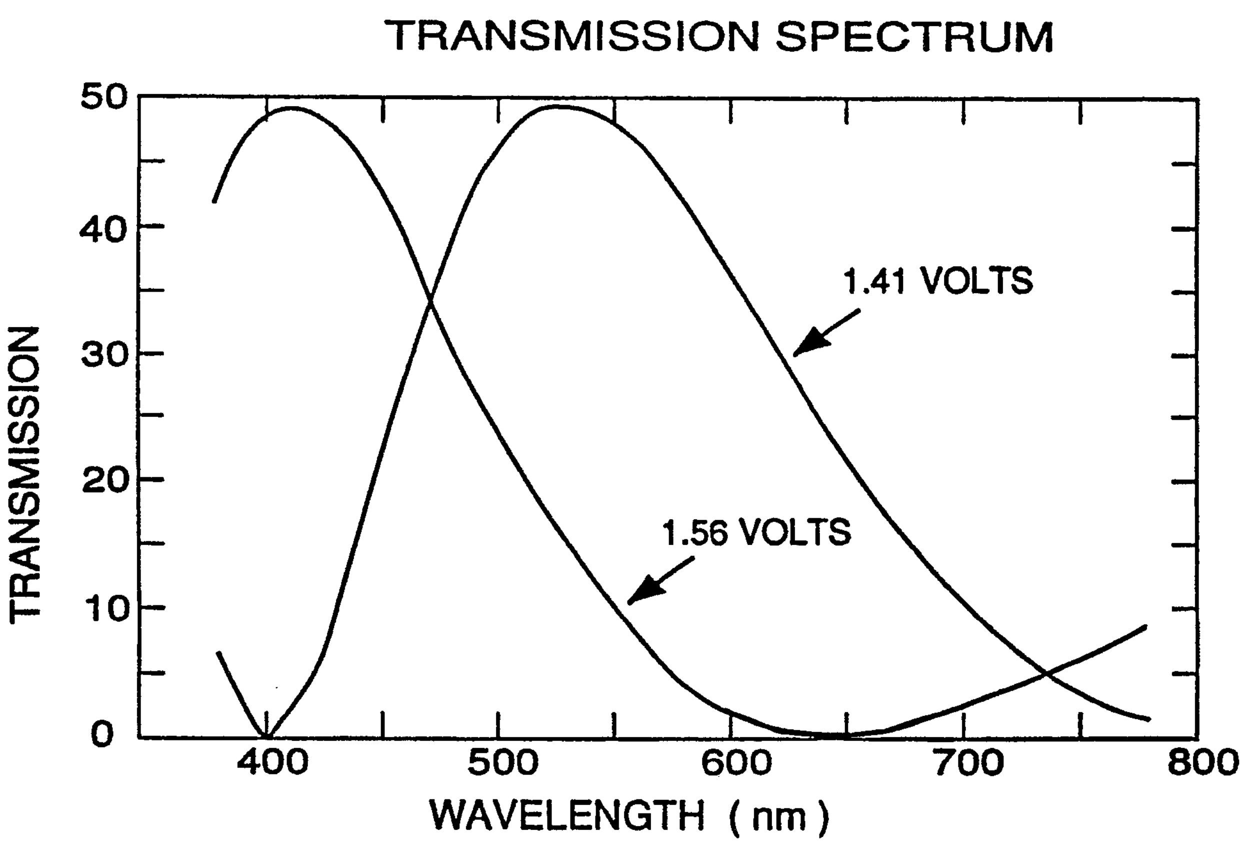

FIG. 3

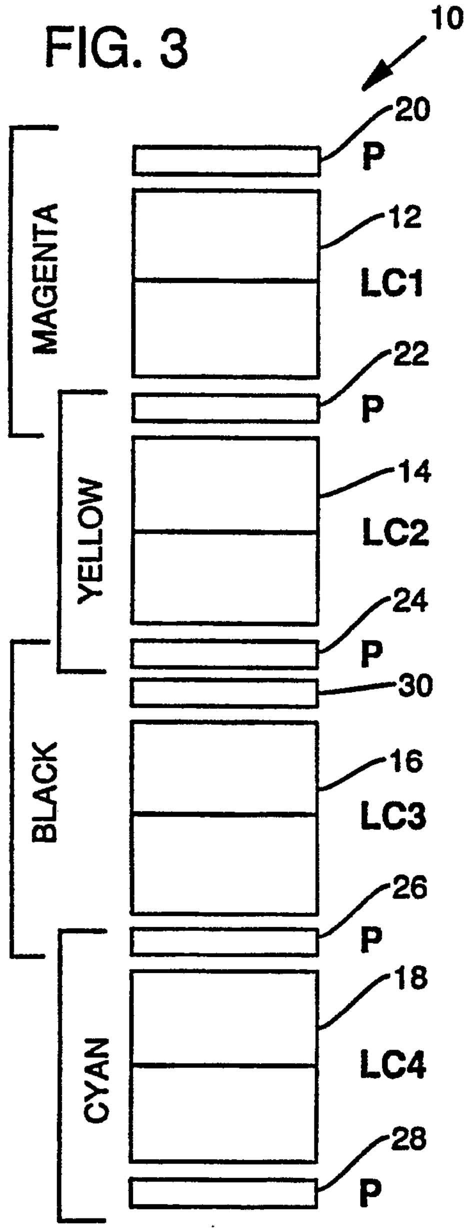


FIG. 4

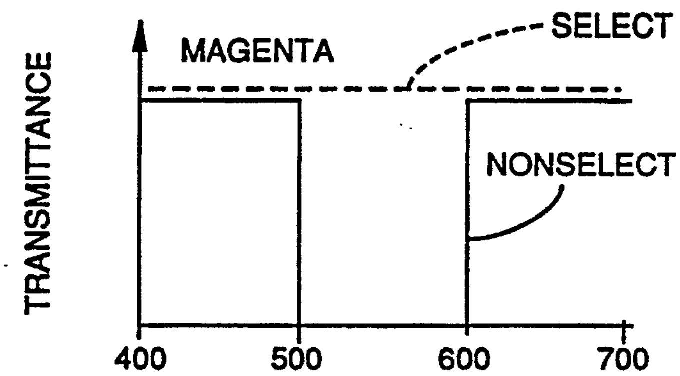


FIG. 5

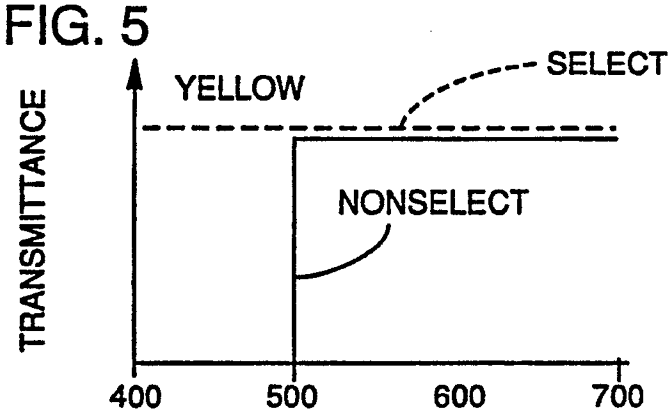


FIG. 6

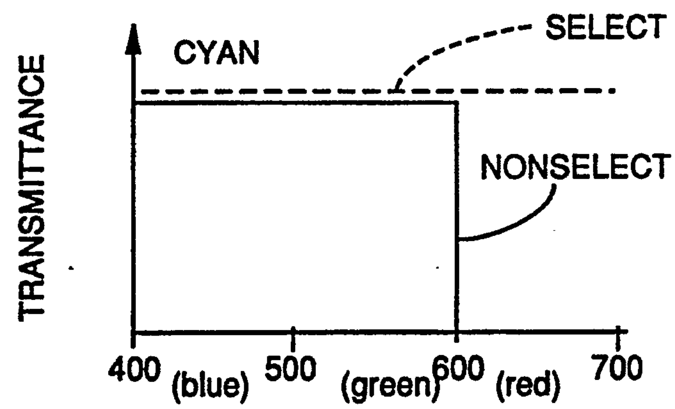

FIG. 7

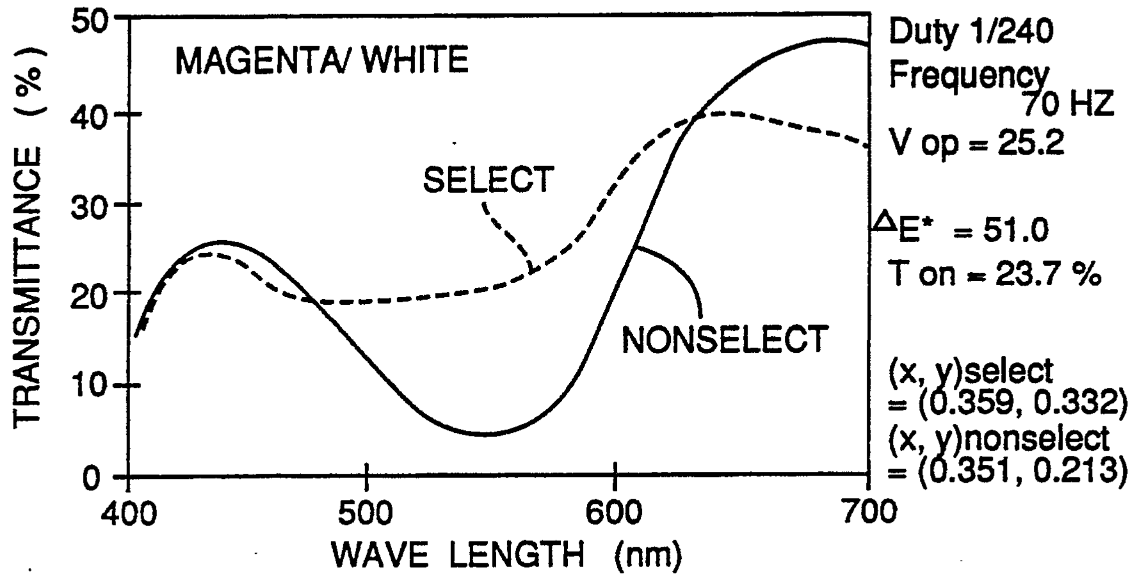
50
40
30
20
10
0
TRANSMITTANCE (%)
MAGENTA/ WHITE
SELECT
NONSELECT
400
500
600
700
WAVE LENGTH (nm)
Duty 1/240
Frequency
70 HZ
V op = 25.2
ΔE* = 51.0
T on = 23.7 %
(x, y)select
= (0.359, 0.332)
(x, y)nonselect
= (0.351, 0.213)

FIG. 8

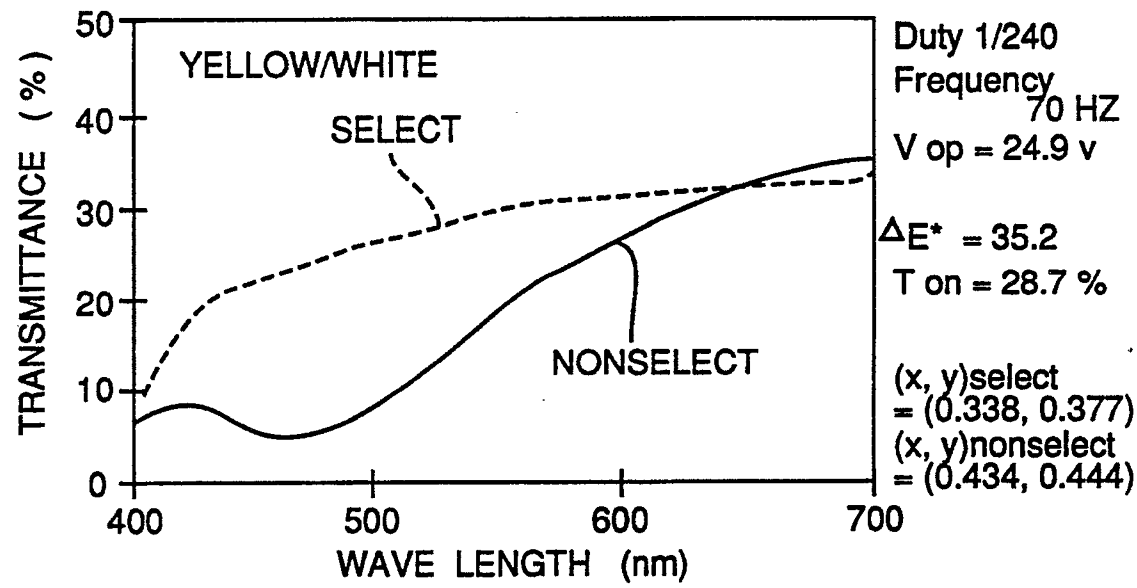
50
40
30
20
10
0
TRANSMITTANCE (%)
YELLOW/WHITE
SELECT
NONSELECT
400
500
600
700
WAVE LENGTH (nm)
Duty 1/240
Frequency
70 HZ
V op = 24.9 v
ΔE* = 35.2
T on = 28.7 %
(x, y)select
= (0.338, 0.377)
(x, y)nonselect
= (0.434, 0.444)

FIG. 9

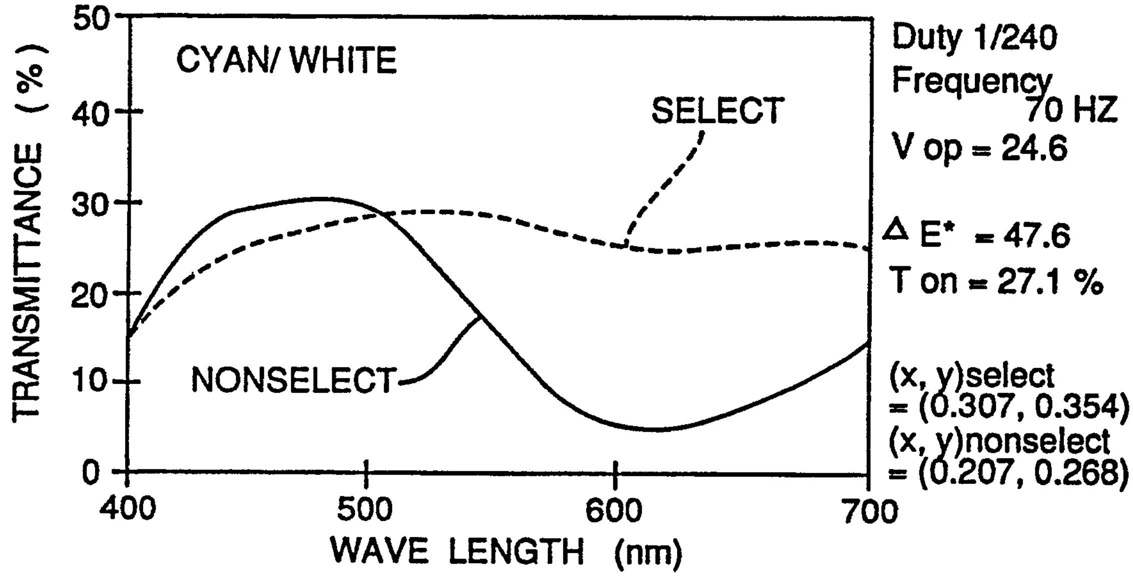
TRANSMITTANCE (%)
50
40
30
20
10
0
CYAN/ WHITE
SELECT
NONSELECT
400
500
600
700
WAVE LENGTH (nm)
Duty 1/240
Frequency
70 HZ
V op = 24.6
Δ E* = 47.6
T on = 27.1 %
(x, y)select
= (0.307, 0.354)
(x, y)nonselect
= (0.207, 0.268)

FIG. 18

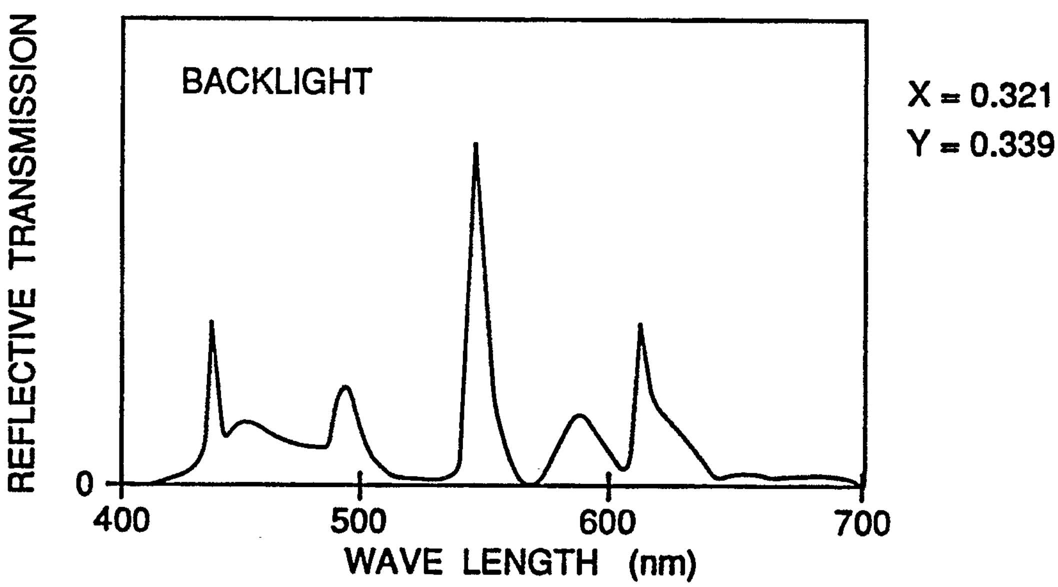
REFLECTIVE TRANSMISSION
0
BACKLIGHT
400
500
600
700
WAVE LENGTH (nm)
X = 0.321
Y = 0.339

FIG. 10

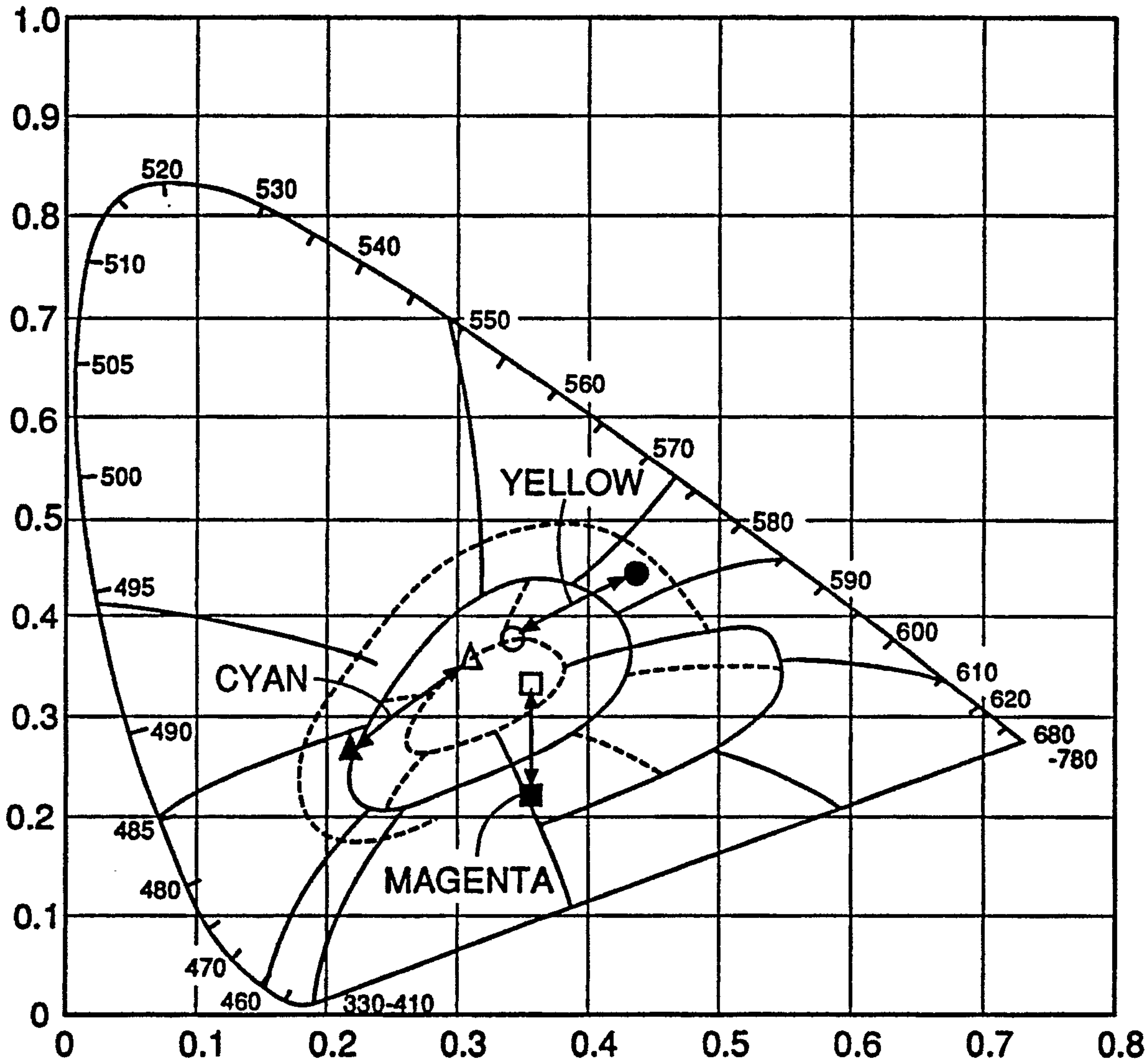
1.0
0.9
0.8
0.7
0.6
0.5
0.4
0.3
0.2
0.1
0
0.1
0.2
0.3
0.4
0.5
0.6
0.7
0.8
520
530
540
550
560
570
580
590
600
610
620
680
-780
510
505
500
495
490
485
480
470
460
330-410
YELLOW
CYAN
MAGENTA

FIG. 11

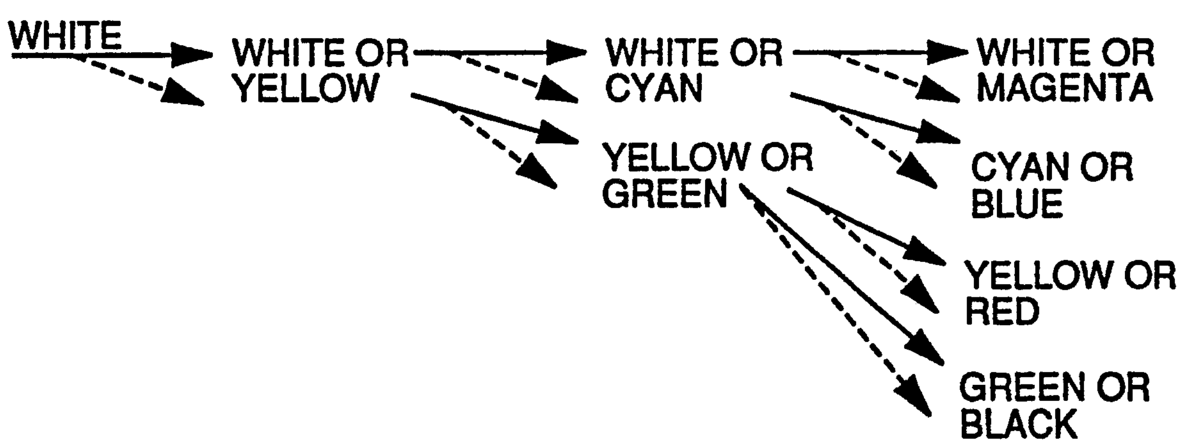
WHITE
WHITE OR YELLOW
WHITE OR CYAN
WHITE OR MAGENTA
YELLOW OR GREEN
CYAN OR BLUE
YELLOW OR RED
GREEN OR BLACK

FIG. 12

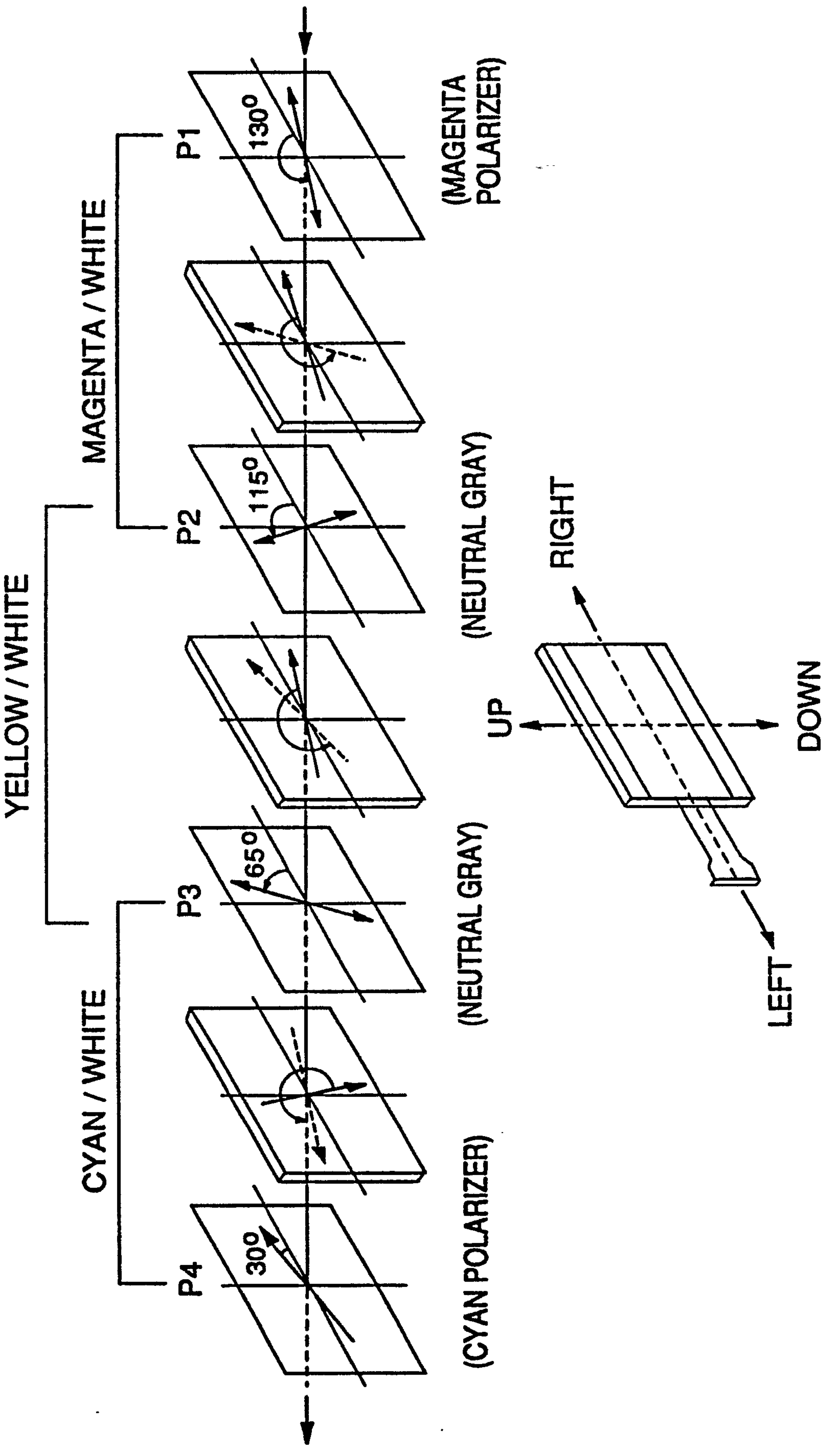
MAGENTA / WHITE
YELLOW / WHITE
CYAN / WHITE
P1
130°
(MAGENTA POLARIZER)
P2
115°
(NEUTRAL GRAY)
P3
65°
(NEUTRAL GRAY)
P4
30°
(CYAN POLARIZER)
RIGHT
UP
DOWN
LEFT

FIG. 13

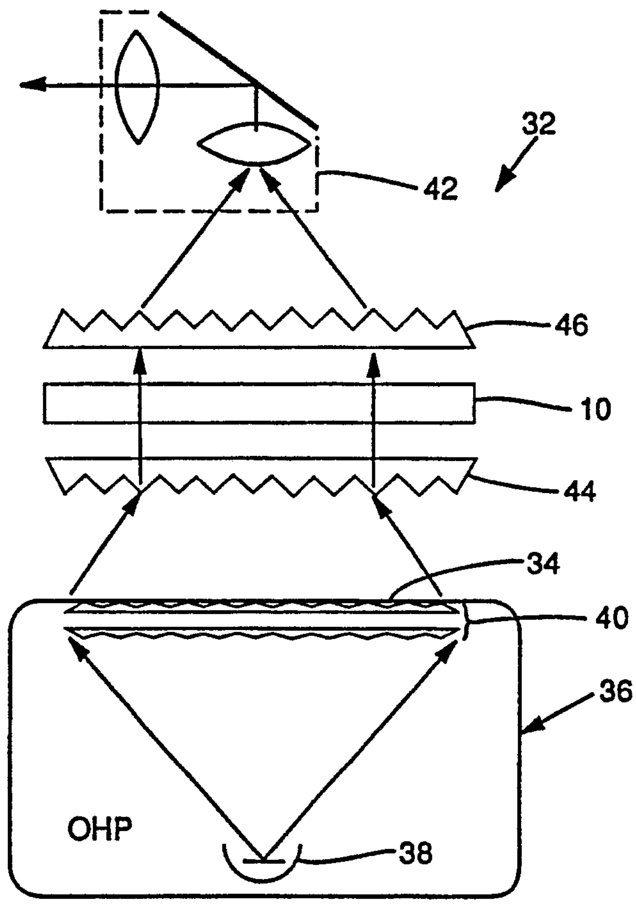


FIG. 14

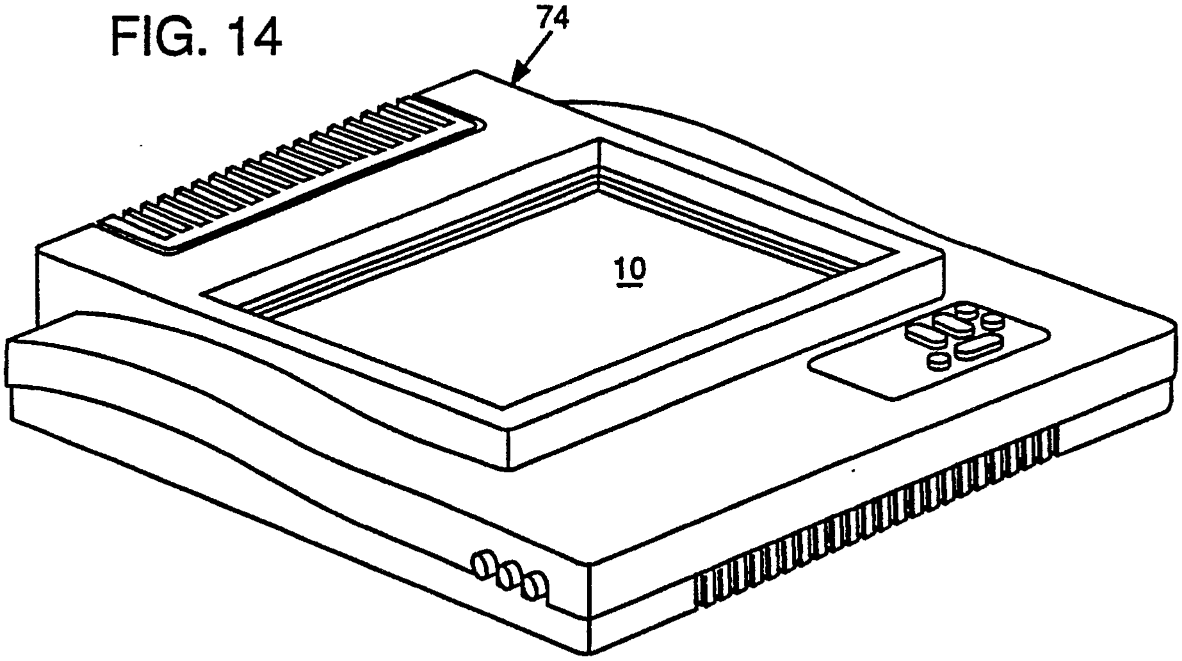

FIG. 15

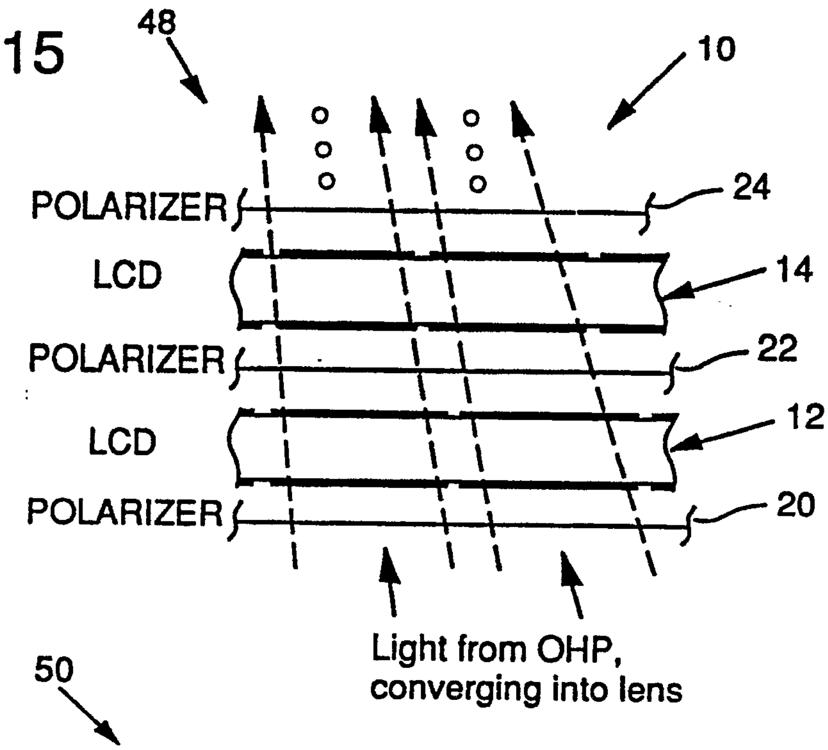


FIG. 16

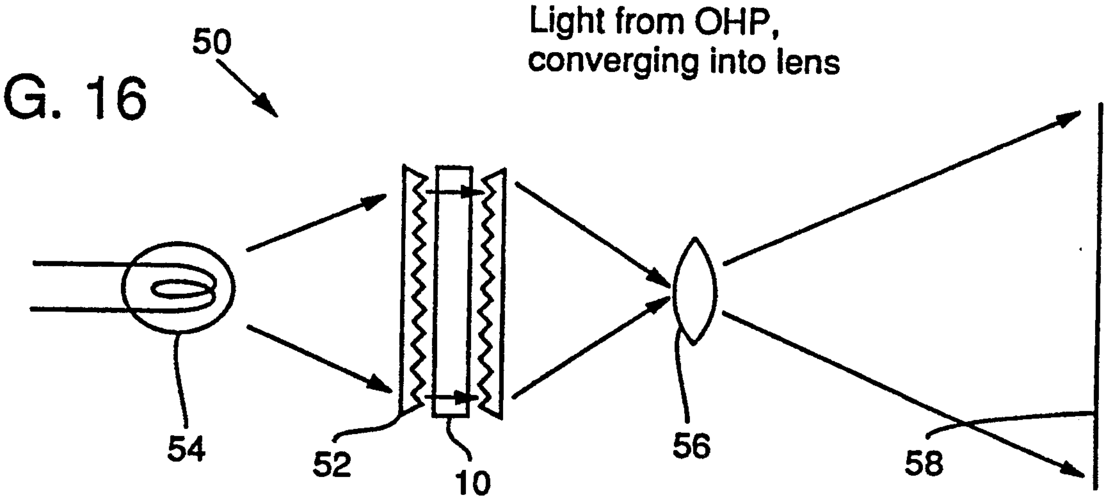


FIG. 17

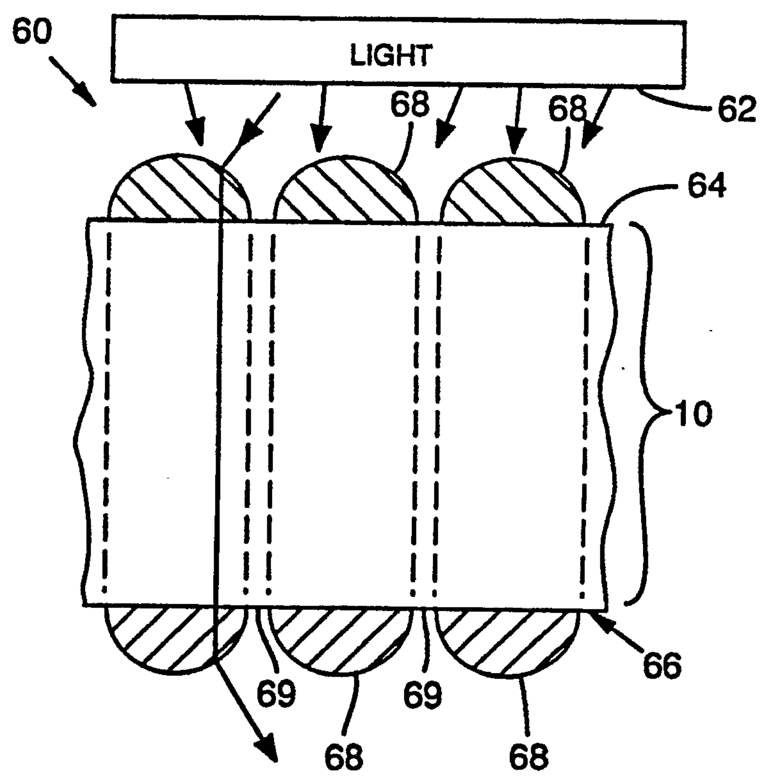

FIG. 19

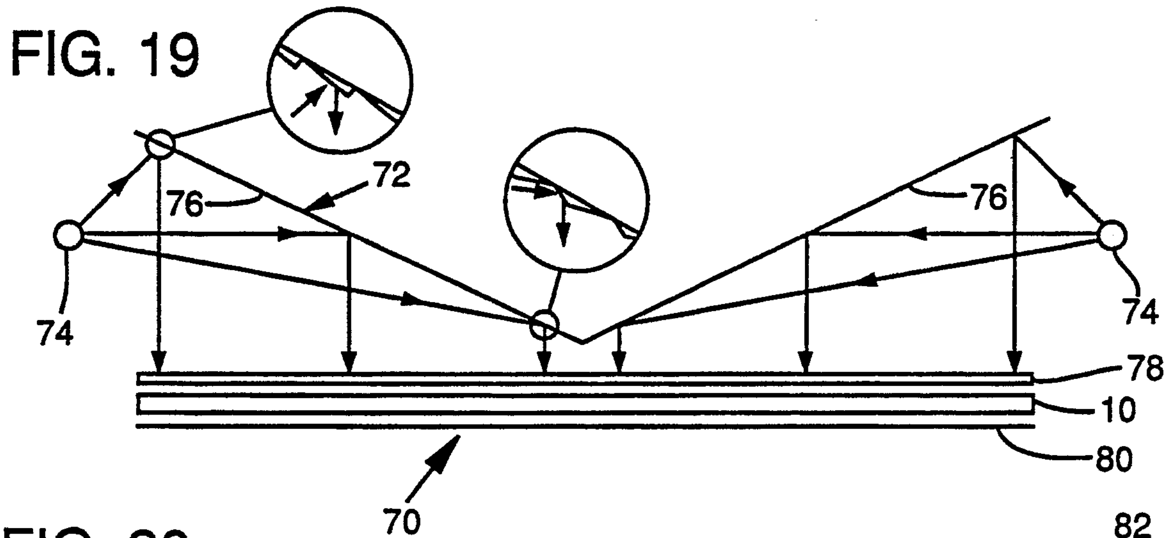


FIG. 20

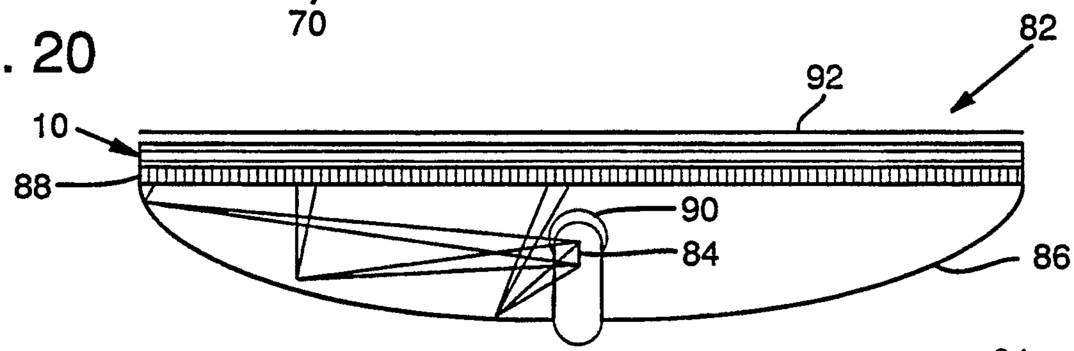


FIG. 21

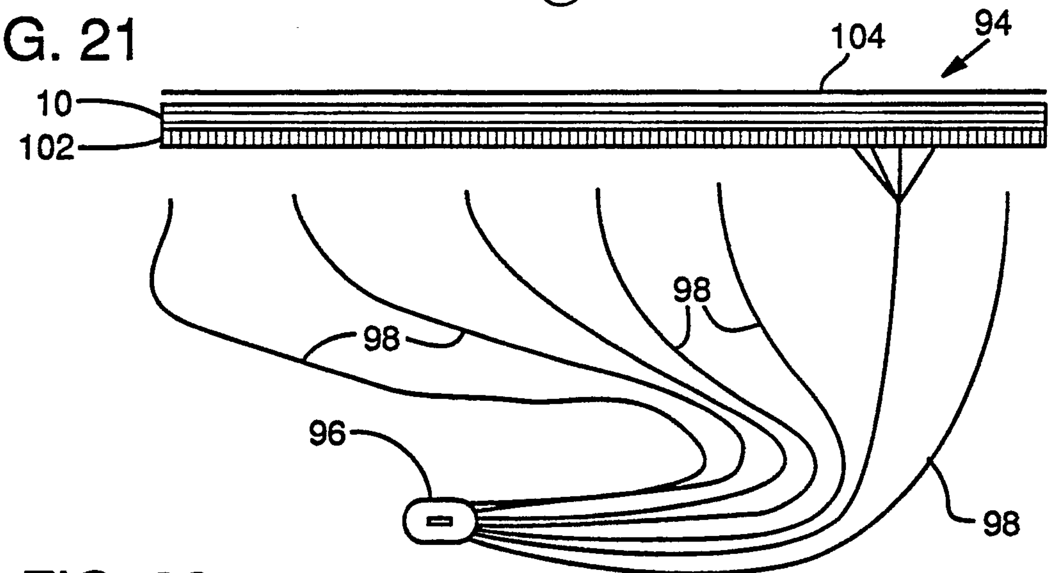


FIG. 22

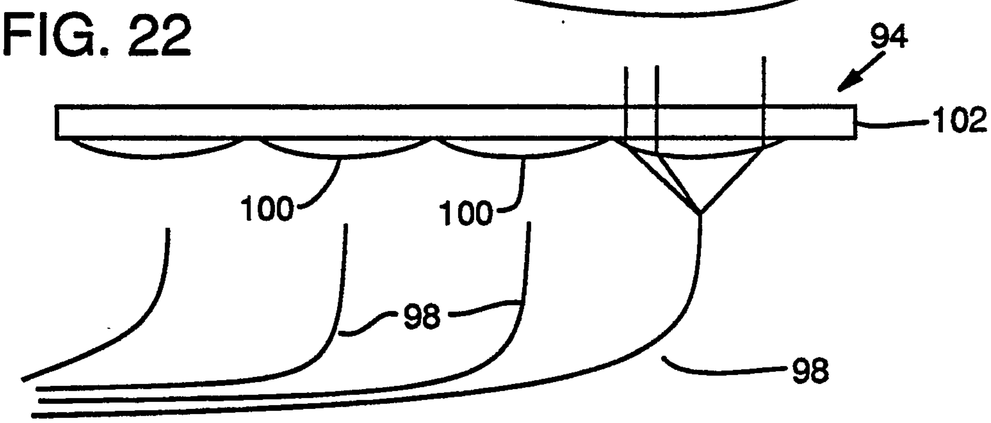

FIG. 23

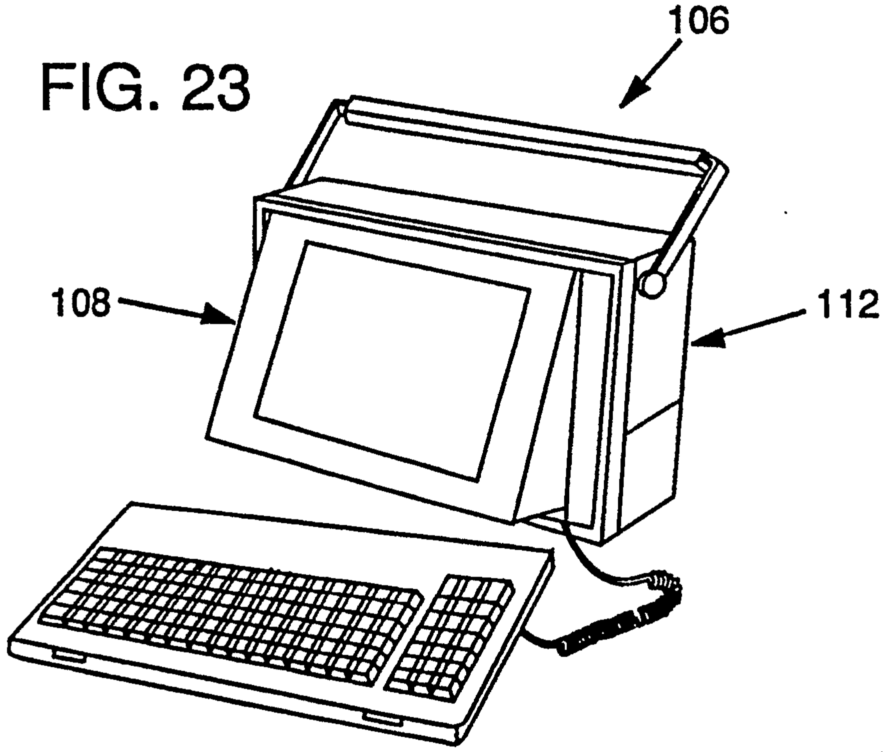


FIG. 24

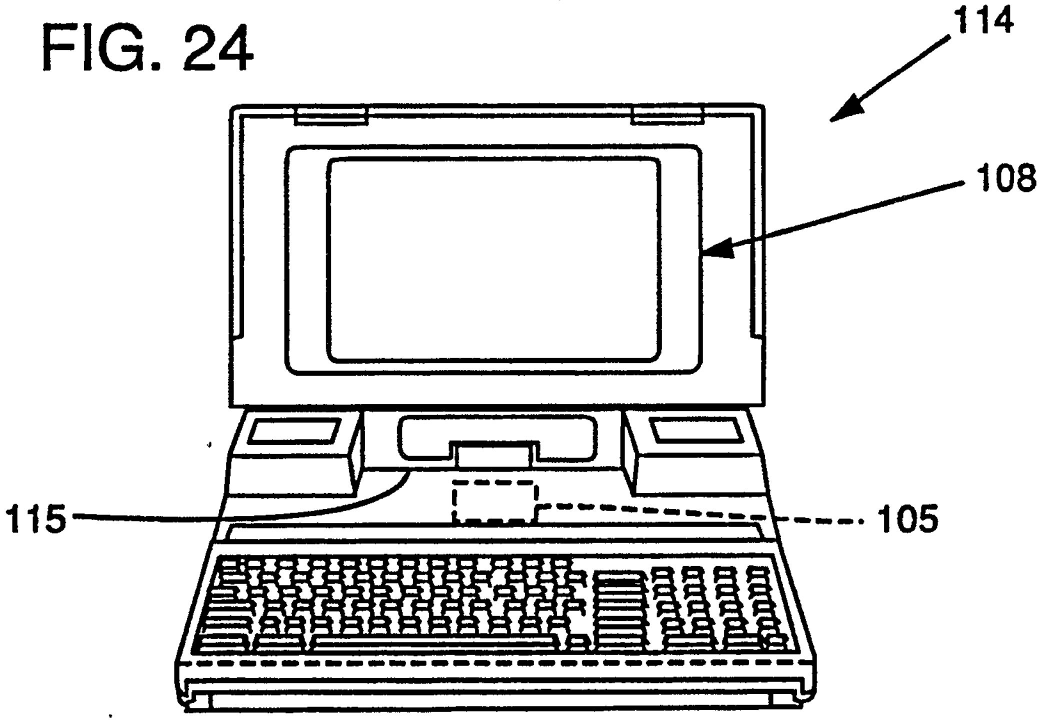

FIG. 25

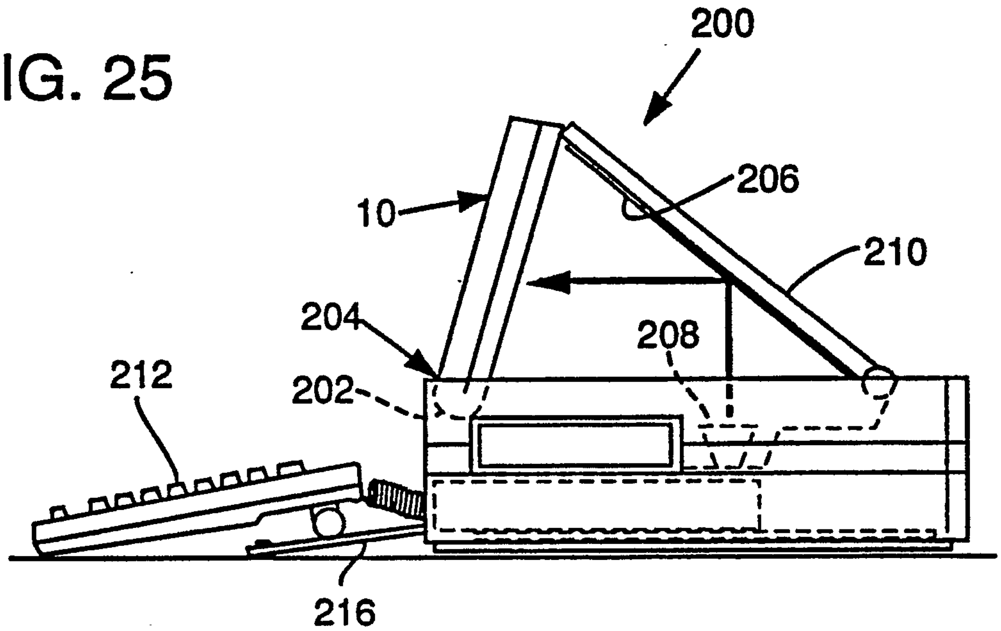


FIG. 26

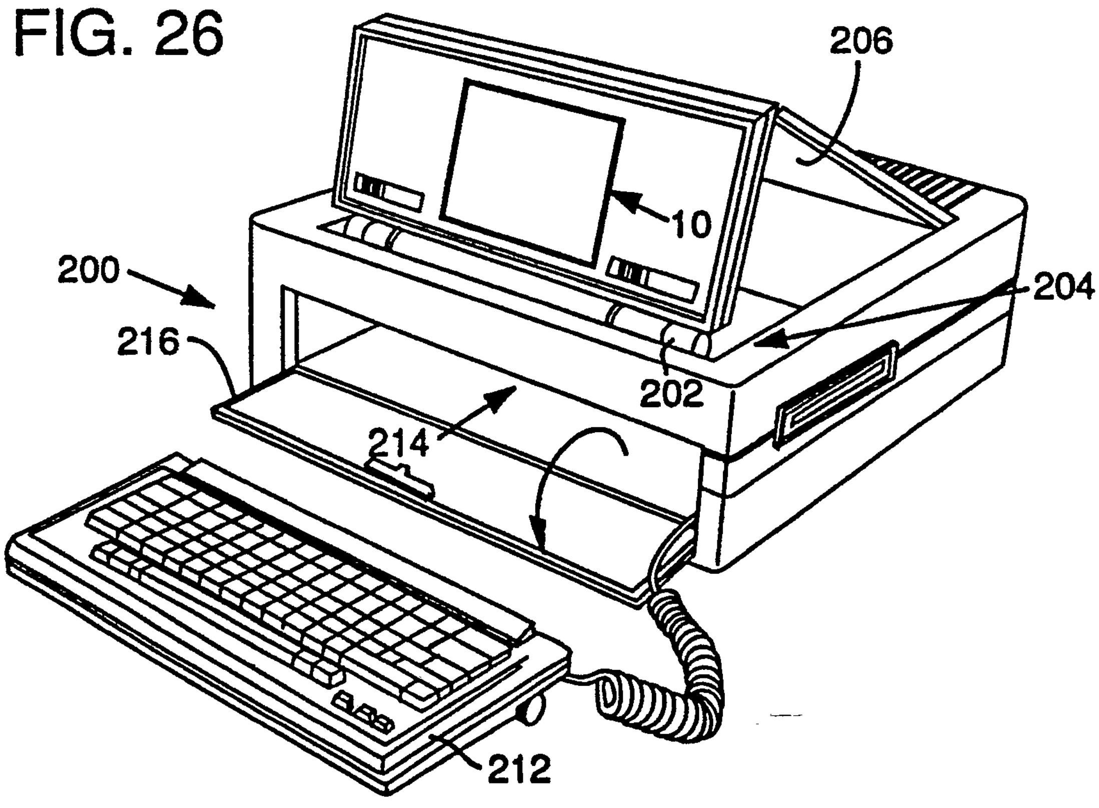

FIG. 28

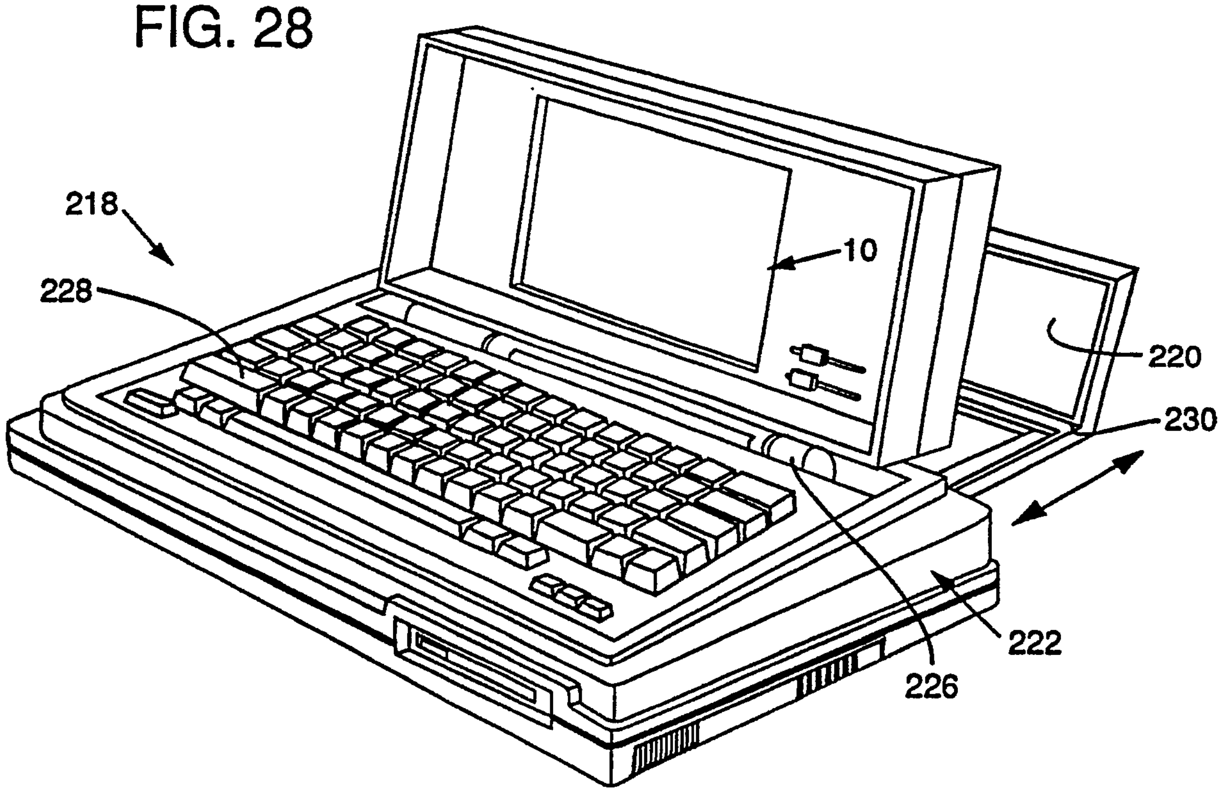


FIG. 27

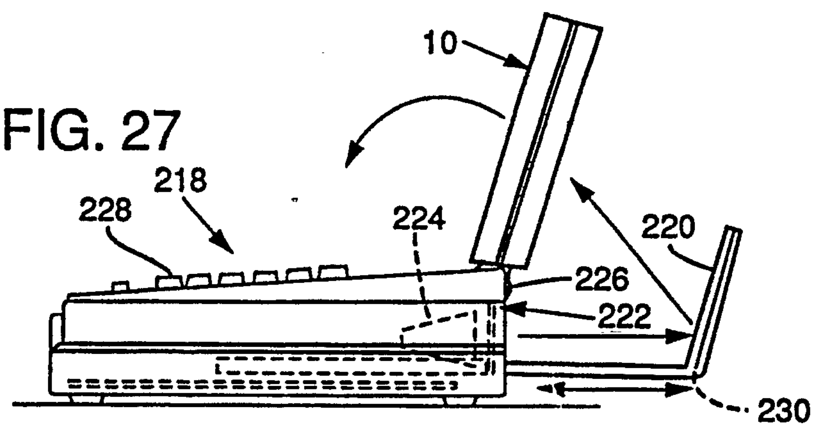

FIG. 30

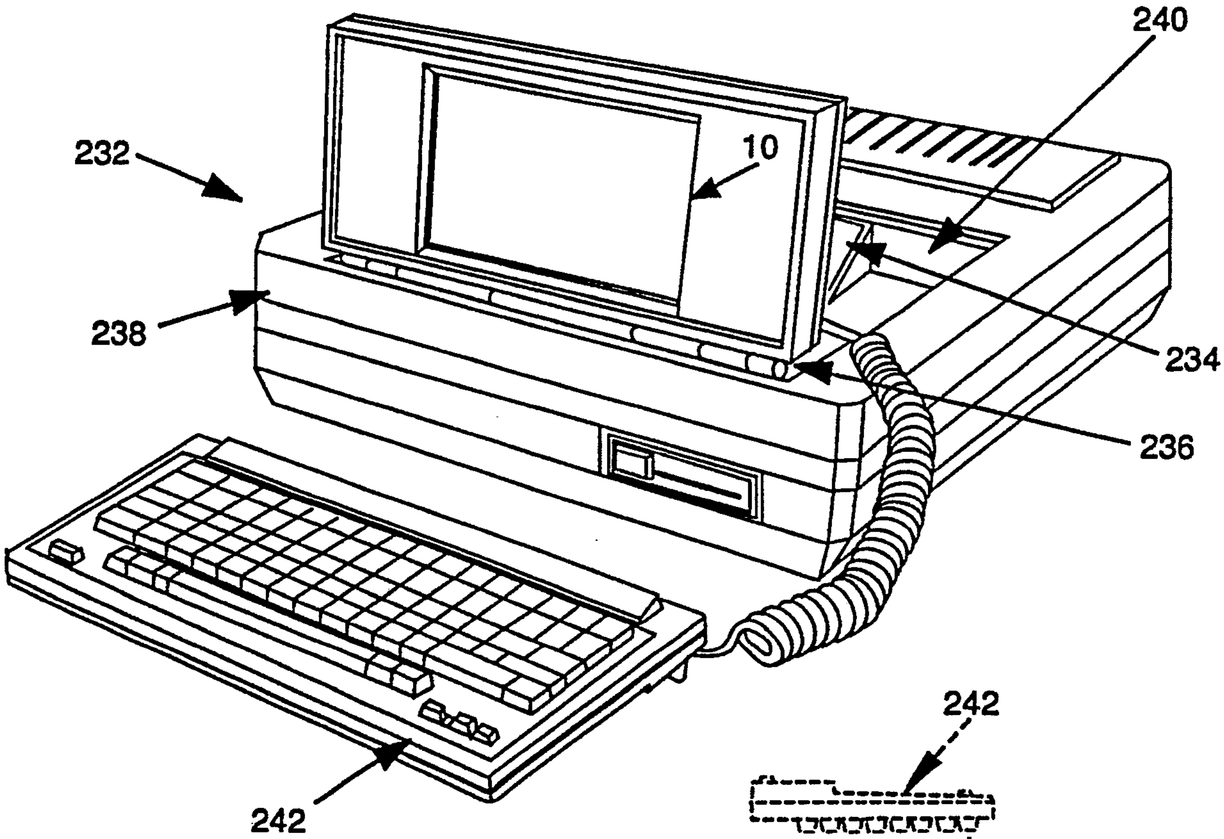


FIG. 29

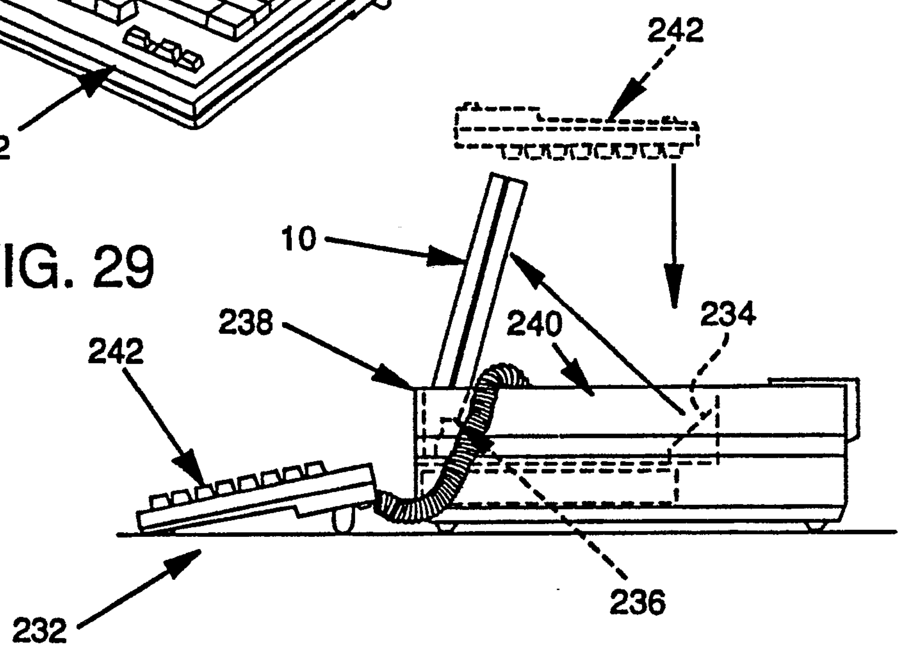

FIG. 31

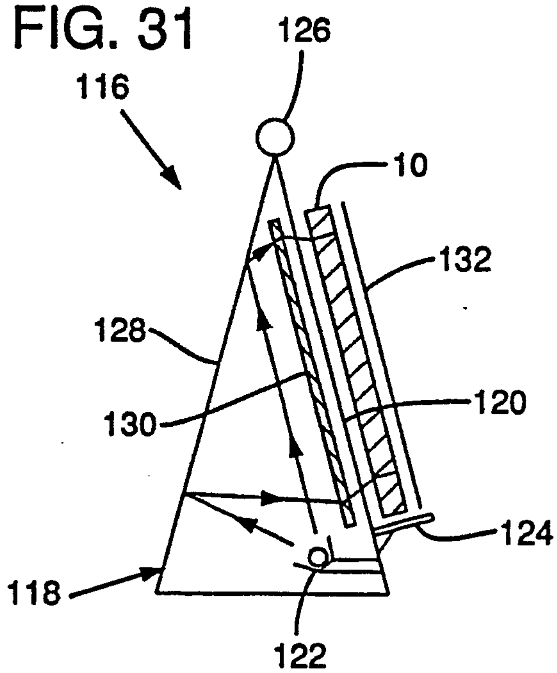


FIG. 32

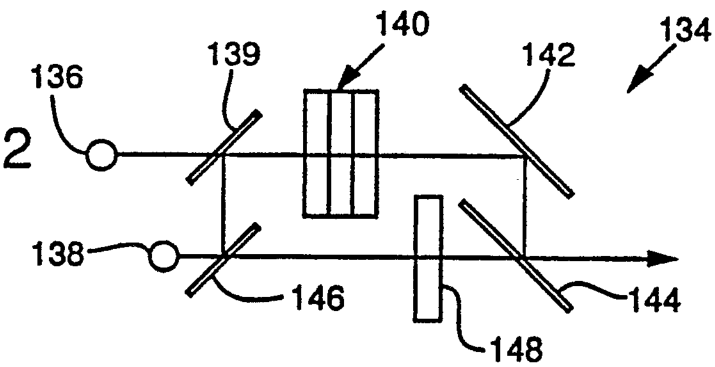


FIG. 33

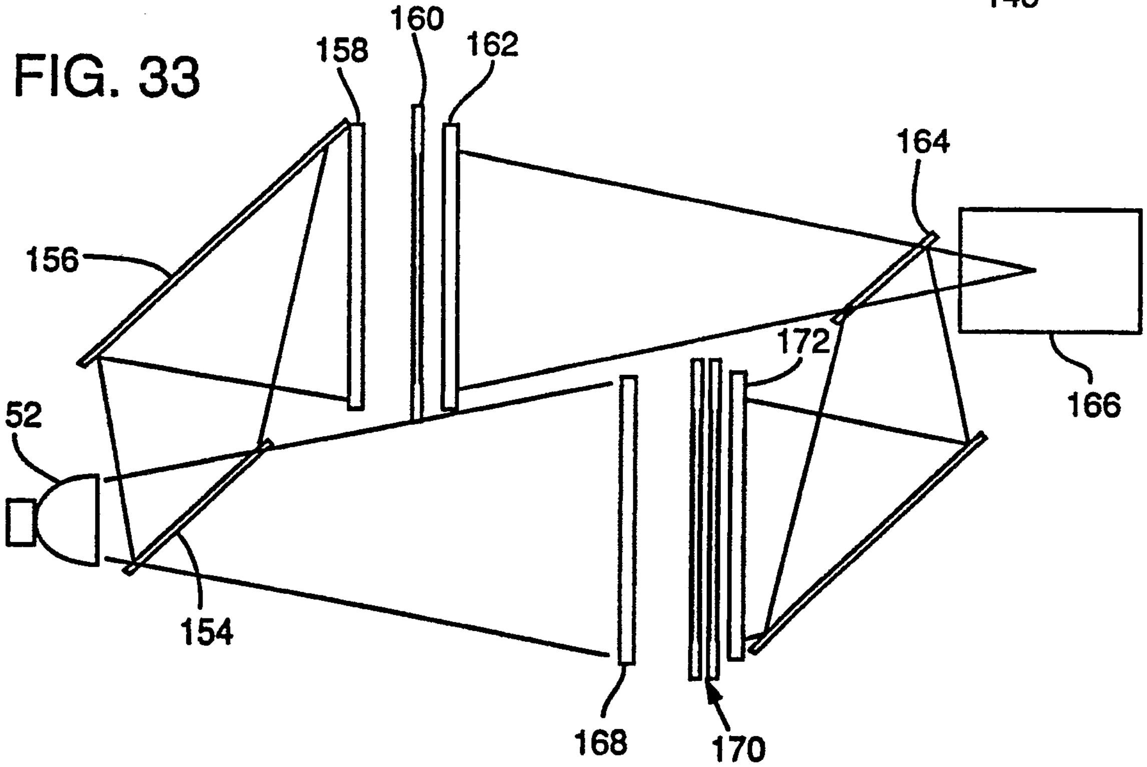

FIG. 34

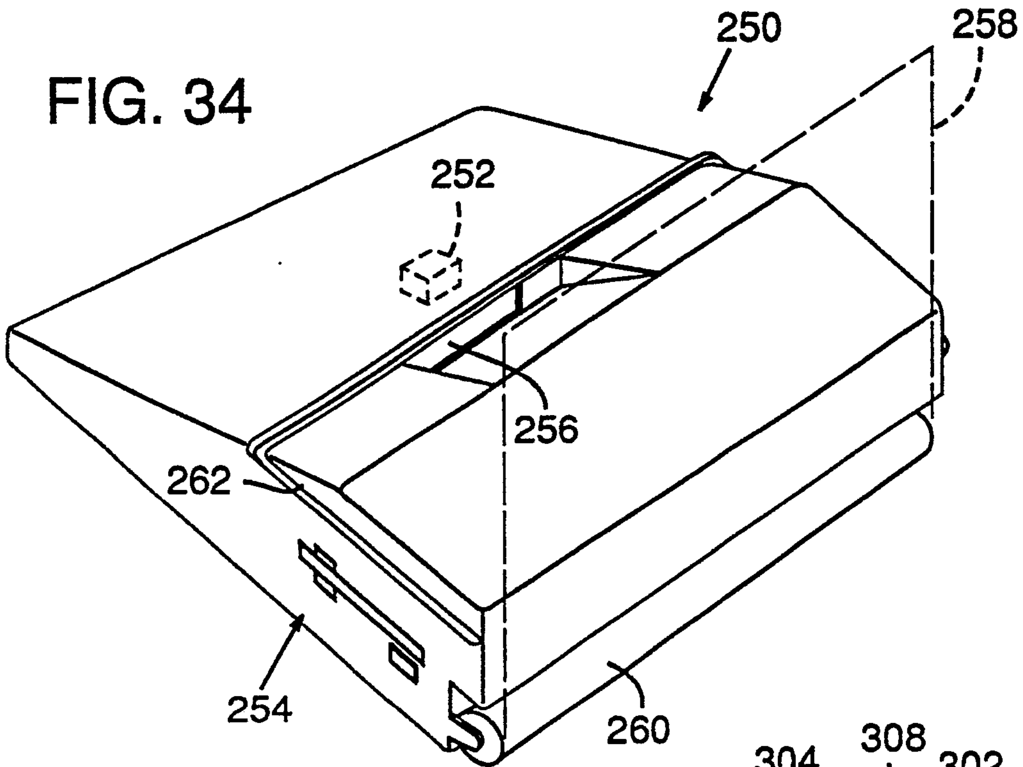


FIG. 35

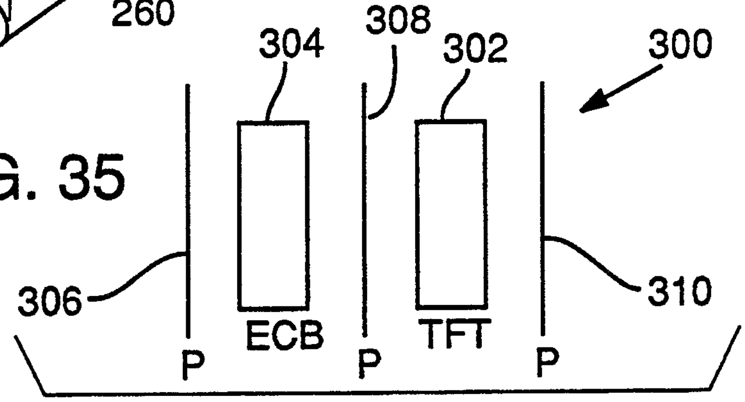


FIG. 36

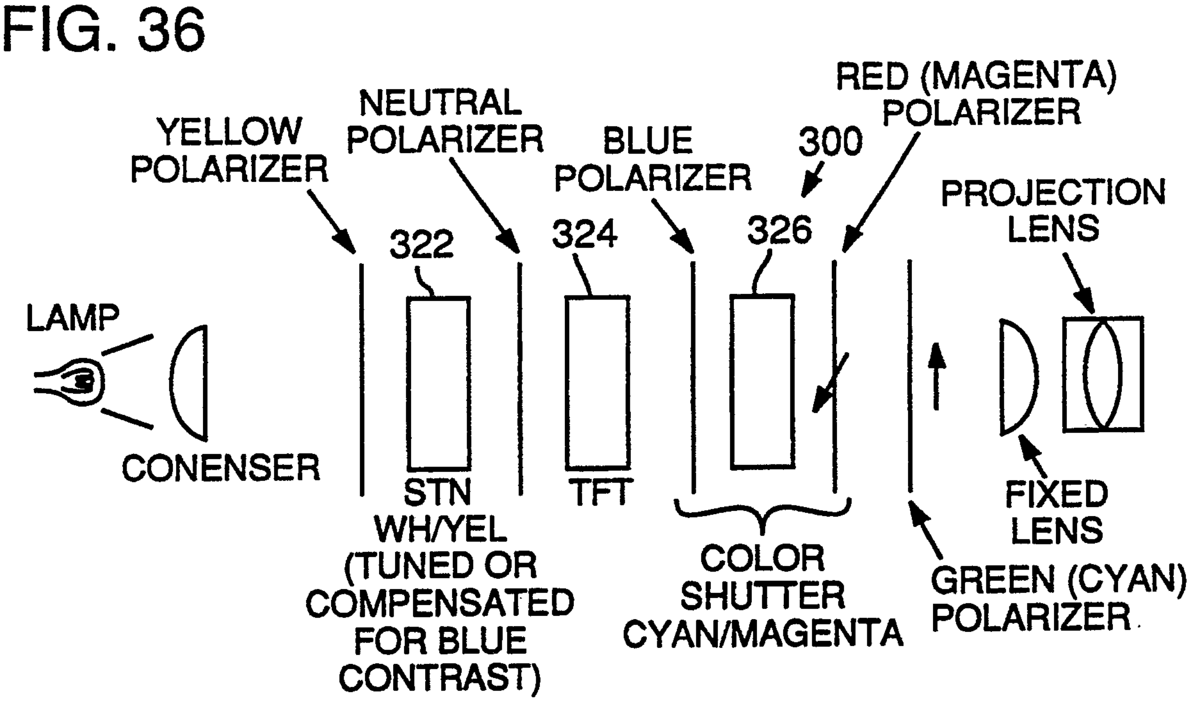

FIG. 37

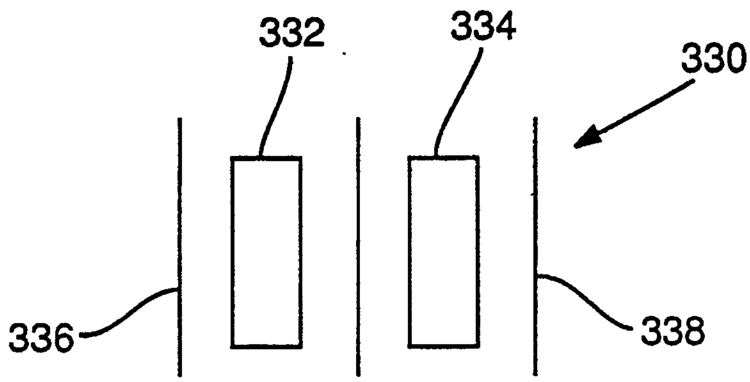


FIG. 38

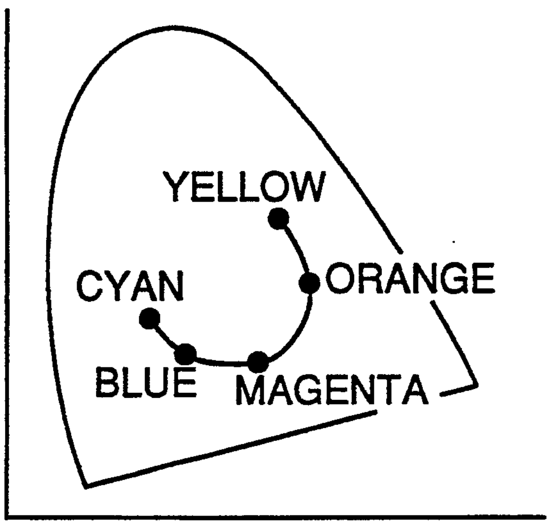


FIG. 39

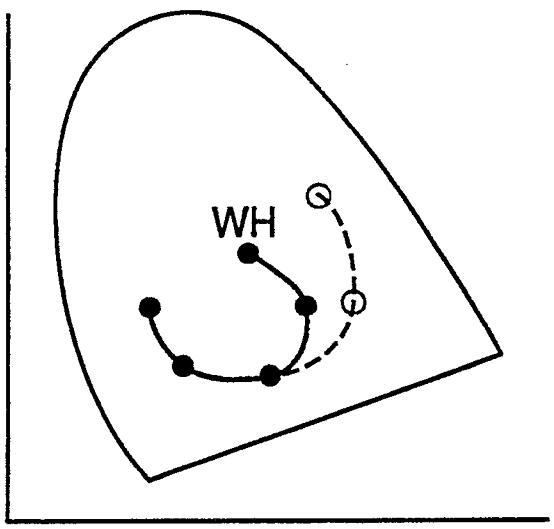


FIG. 40

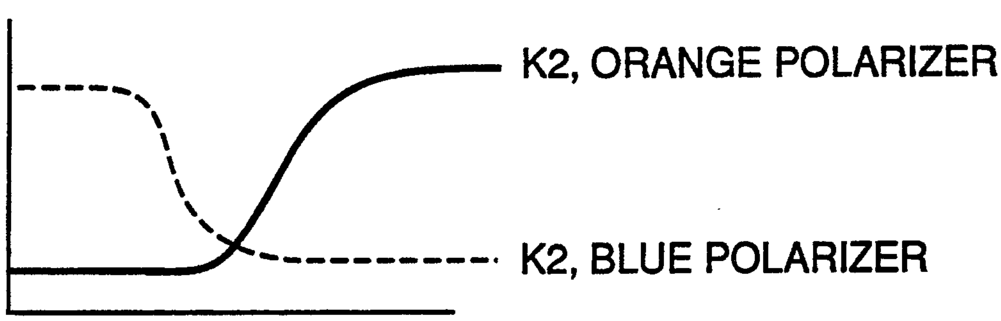

FIG. 41

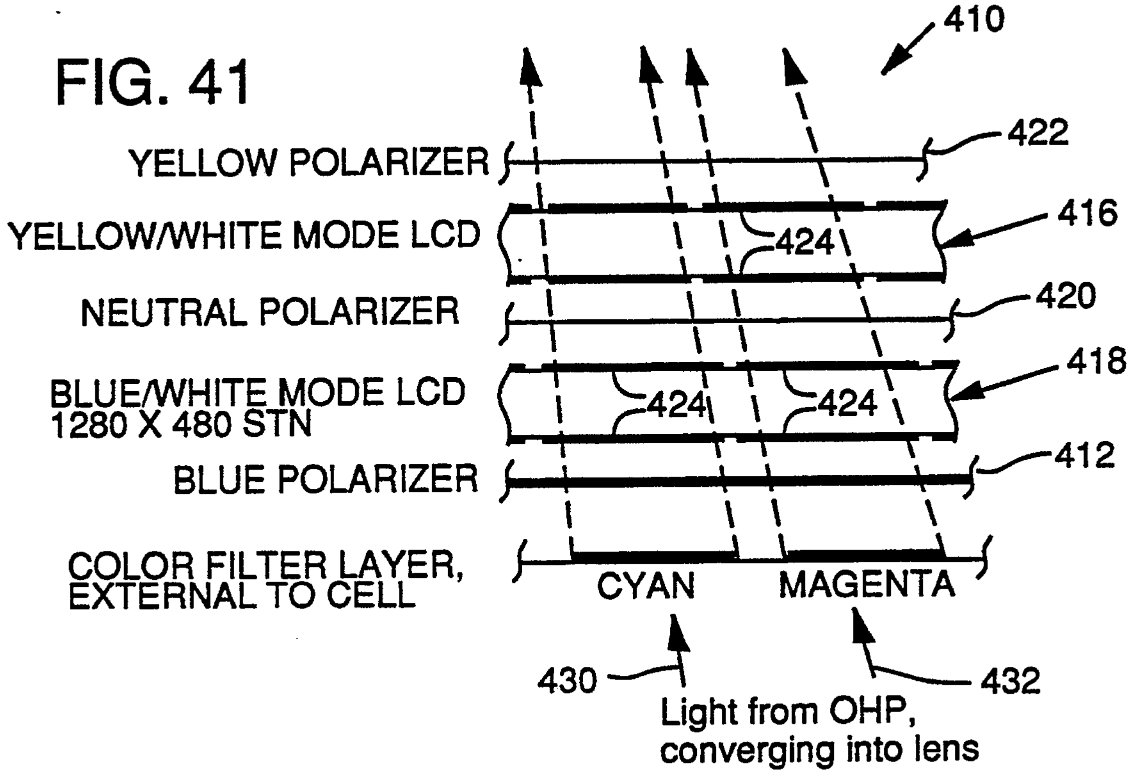


FIG. 42

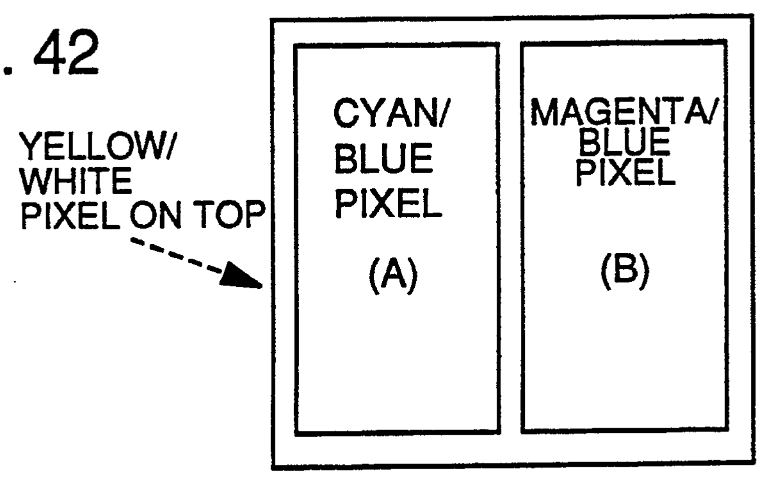


FIG. 43

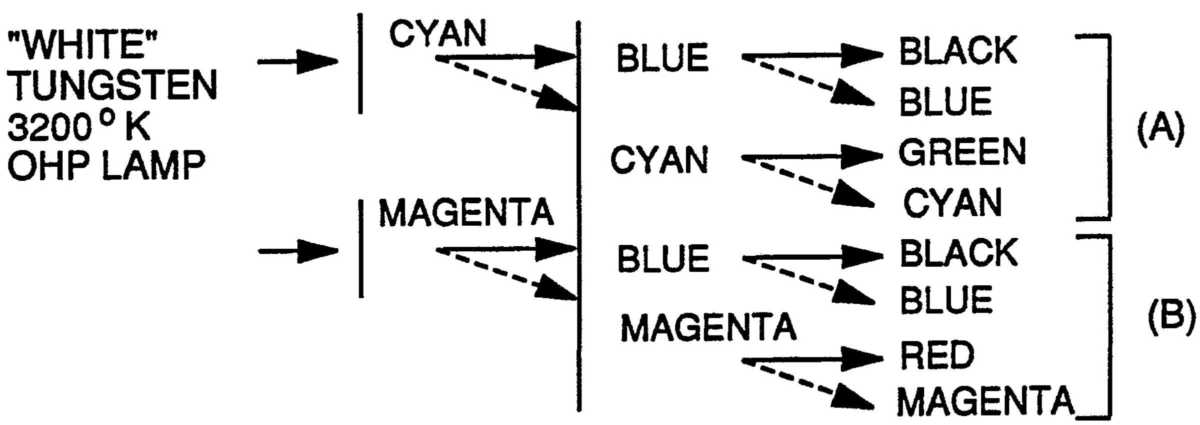

FIG. 44

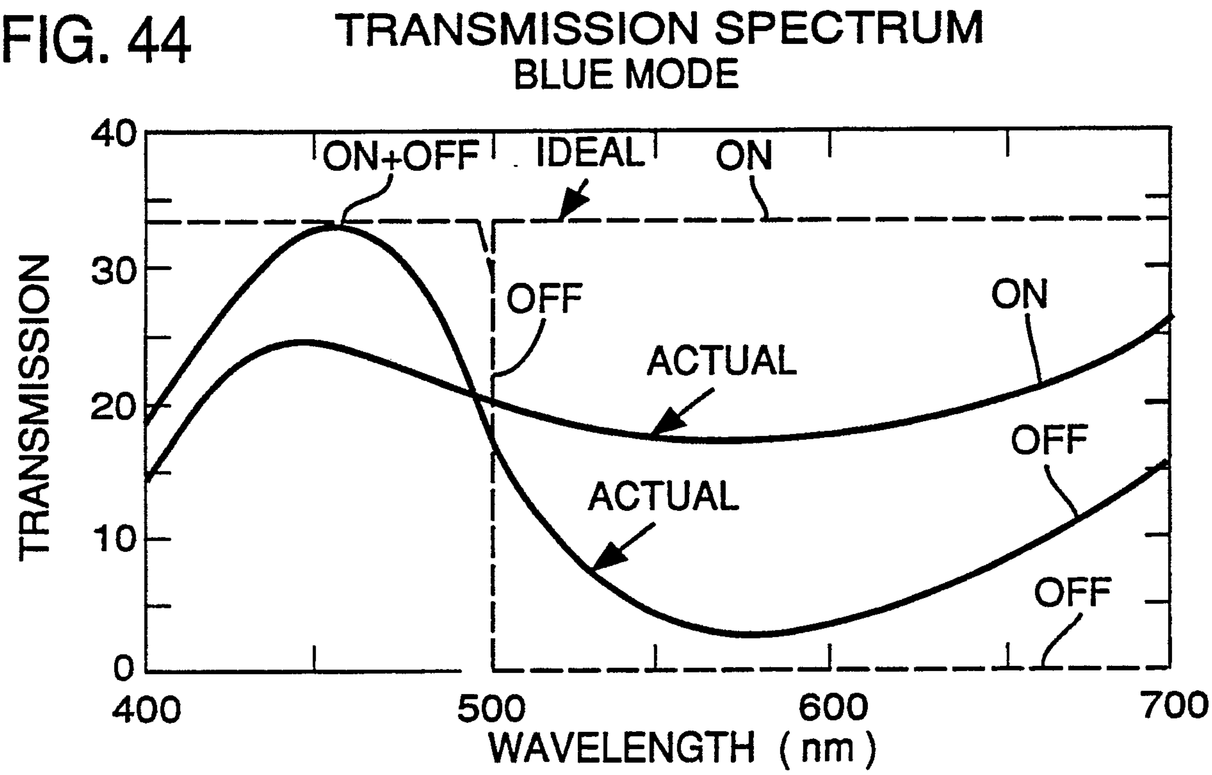
TRANSMISSION SPECTRUM
BLUE MODE
TRANSMISSION
40
30
20
10
0
400
500
600
700
WAVELENGTH (nm)
ON+OFF
IDEAL
ON
OFF
ON
ACTUAL
OFF
ACTUAL
OFF

FIG. 45

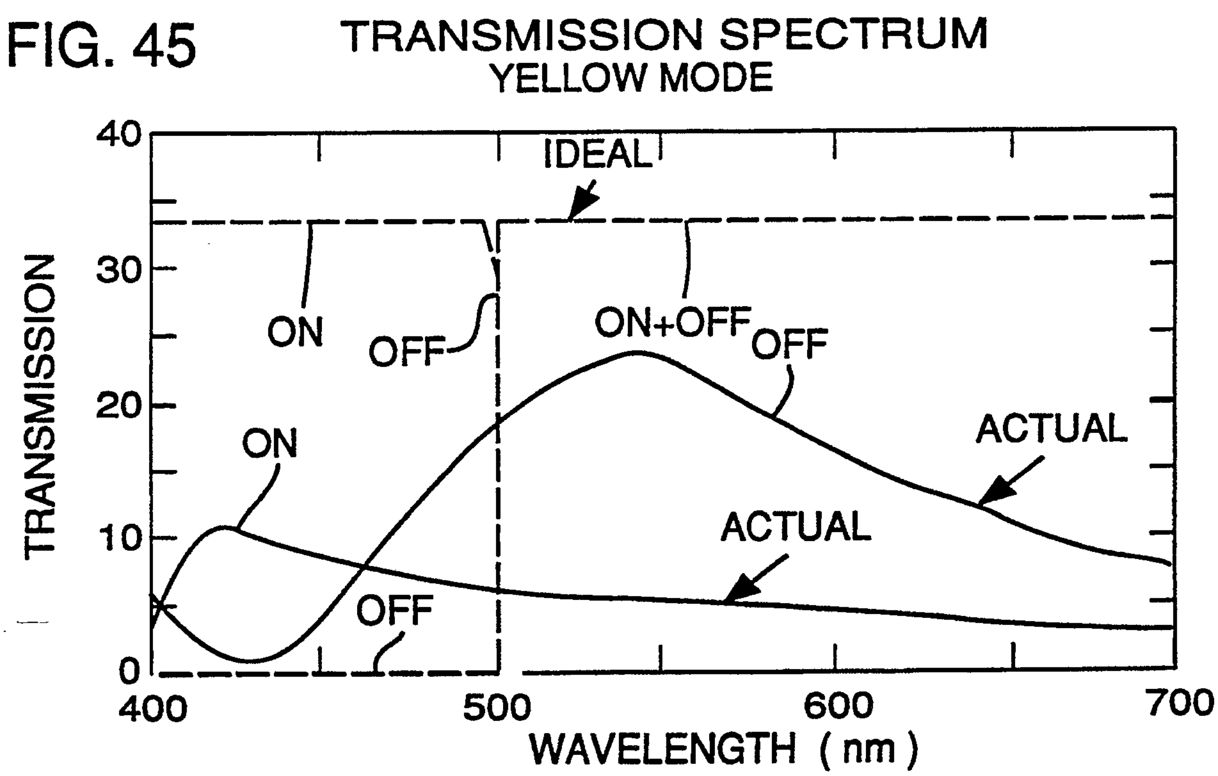
TRANSMISSION SPECTRUM
YELLOW MODE
TRANSMISSION
40
30
20
10
0
400
500
600
700
WAVELENGTH (nm)
IDEAL
ON
OFF
ON+OFF
OFF
ON
ACTUAL
ACTUAL
OFF

FIG. 46

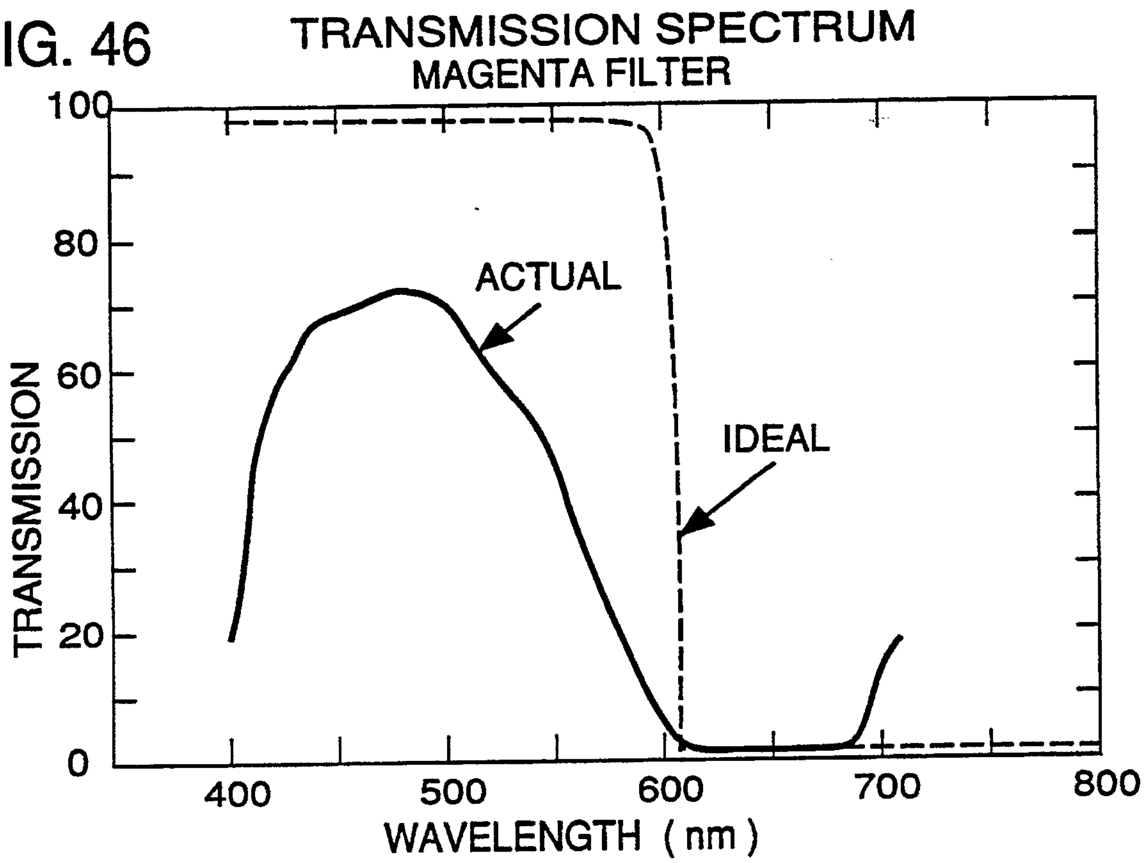
TRANSMISSION SPECTRUM
MAGENTA FILTER
100
80
60
40
20
0
TRANSMISSION
ACTUAL
IDEAL
400
500
600
700
800
WAVELENGTH ( nm )

FIG. 47

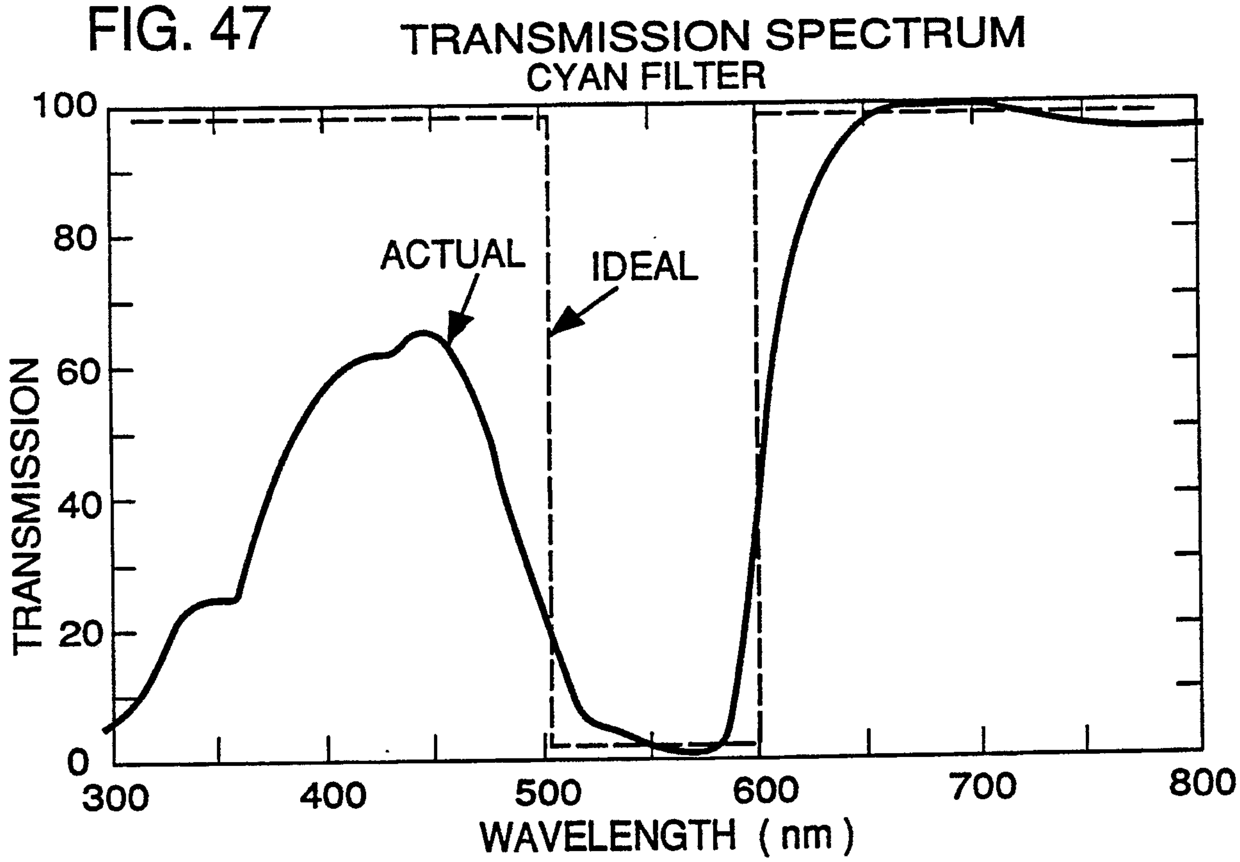
TRANSMISSION SPECTRUM
CYAN FILTER
100
80
60
40
20
0
TRANSMISSION
ACTUAL
IDEAL
300
400
500
600
700
800
WAVELENGTH ( nm )

FIG. 48

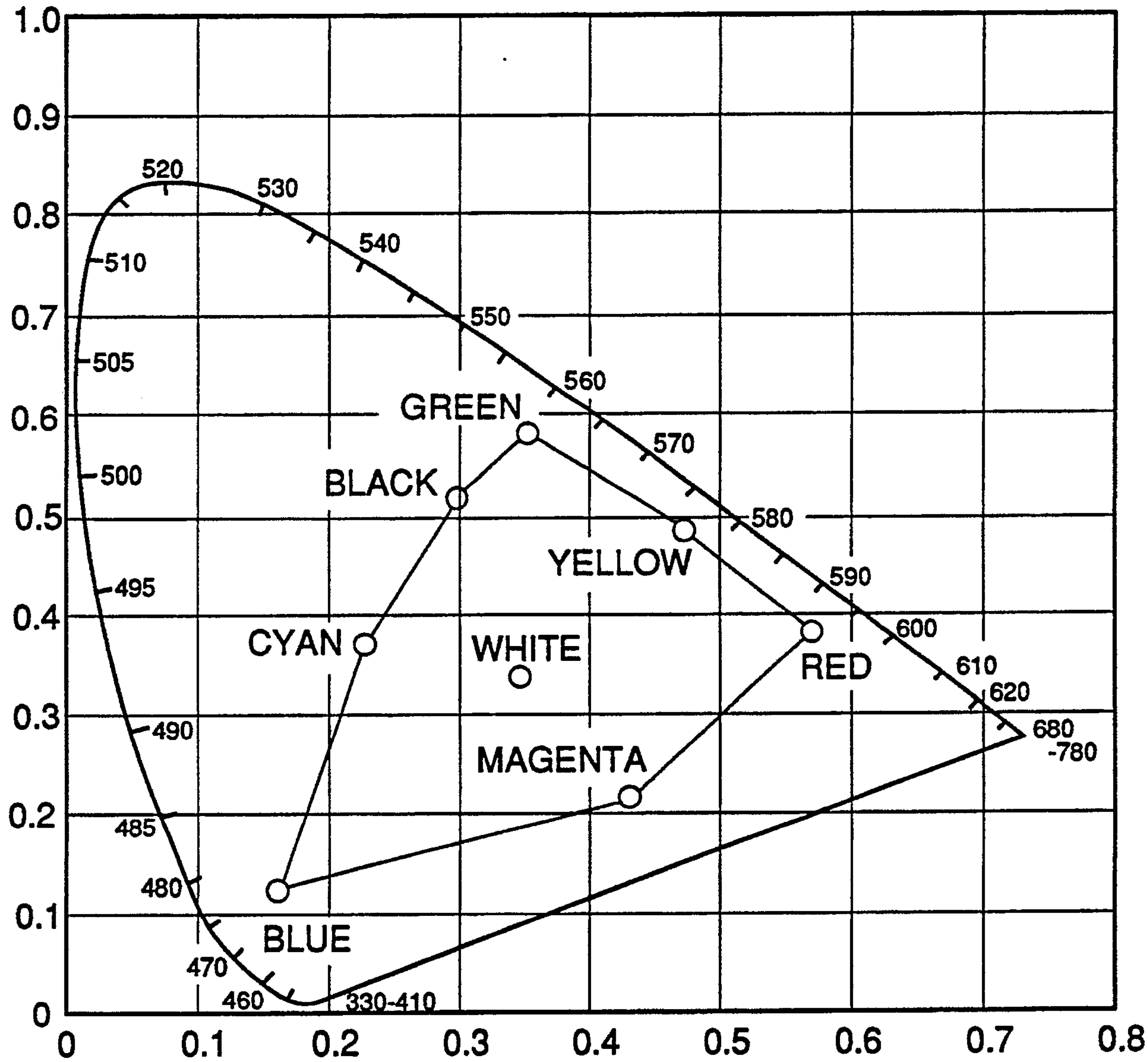
1.0
0.9
0.8
0.7
0.6
0.5
0.4
0.3
0.2
0.1
0
0.1
0.2
0.3
0.4
0.5
0.6
0.7
0.8
520
530
540
550
560
570
580
590
600
610
620
680
-780
510
505
500
495
490
485
480
470
460
330-410
GREEN
BLACK
YELLOW
CYAN
WHITE
RED
MAGENTA
BLUE